# EUROPEAN PATENT APPLICATION

(11) **EP 4 746 537 A1**
(43) Date of publication of application: **20.05.2026**
(21) Application number: 24911117.0
(22) Date of filing: 24.12.2024
(51) Int. Cl.: H04W 52/02

(54) **SLEEP SCHEDULING METHOD AND RELATED APPARATUS**

(30) Priority: 26.12.2023 CN 202311818404
(71) Applicant: Huawei Technologies Co., Ltd., Shenzhen, Guangdong 518129 (CN)
(72) Inventor: MENG, Meng, Shenzhen, Guangdong 518129 (CN); JIANG, Jian, Shenzhen, Guangdong 518129 (CN); XIAO, Houfei, Shenzhen, Guangdong 518129 (CN)
(74) Representative: Gill Jennings & Every LLP
(86) International application number: PCT/CN2024/141846
(87) International publication number: WO 2025/140192

(57) **Abstract**

This application provides a sleep scheduling method and a related apparatus. The method is applied to a terminal device. The method includes: After first service data is transmitted with a network device through a wireless communication system (for example, a wireless fidelity Wi-Fi system), the wireless communication system enters a sleep state and wakes up according to a first sleep scheduling strategy. The first sleep scheduling strategy includes first duration (including at least one first time slice and at least one second time slice). The first time slice and the second time slice in the first duration alternate. The wireless communication system is in the sleep state in the first time slice, and is in a working state (including a listen state) in the second time slice. For example, a length of the first time slice and/or a length of the second time slice are/is determined based on a delay required by a service corresponding to the first service data. Therefore, the system can periodically enter the sleep state and the listen state according to a delay requirement of a current service, instead of being always in the listen state. This ensures real-time service experience and reduces power consumption.

## Description

This application claims priority to Chinese Patent Application No. 202311818404.7, filed with the China National Intellectual Property Administration on December 26, 2023 and entitled "SLEEP SCHEDULING METHOD AND RELATED APPARATUS", which is incorporated herein by reference in its entirety.

### TECHNICAL FIELD

This application relates to the field of computer technologies, and in particular, to a sleep scheduling method and a related apparatus.

### BACKGROUND

With continuous evolution of a wireless fidelity (wireless fidelity, Wi-Fi) protocol, a transmission rate of the Wi-Fi protocol is rapidly increased. However, power consumption of a terminal device remains high, affecting user experience. A Wi-Fi system of the terminal device may be in a sleep state, and power consumption in the sleep state is very low. Therefore, how to enter the sleep state is one of important research directions for Wi-Fi power consumption optimization.

### SUMMARY

This application discloses a sleep scheduling method and a related apparatus, so that a wireless fidelity Wi-Fi system of a terminal device can be enabled, without affecting real-time service experience, to be in a sleep state as much as possible, thereby reducing power consumption of the Wi-Fi system.

According to a first aspect, this application provides a sleep scheduling method, applied to a terminal device. A status of a wireless communication system (for example, a wireless fidelity Wi-Fi system) of the terminal device includes a sleep state and a working state (including a listen state). The method includes: The terminal device performs a process of transmitting first service data with a network device through the wireless communication system, and ends transmission of the first service data at a first moment. The wireless communication system may enter the sleep state and wake up (which may also be referred to as "perform sleep scheduling") according to a first sleep scheduling strategy after the first moment. The first sleep scheduling strategy includes first duration. The first duration includes one or more first time slices and one or more second time slices. The first sleep strategy further includes: The terminal device may replace a wait time of a power save mode PSM with the first duration. In the first duration, the wireless communication system enters the sleep state at a start moment of the first time slice, and is in the sleep state in the first time slice, and the wireless communication system enters the listen state at a start moment of the second time slice, and is in the working state in the second time slice. When the wireless communication system has no uplink service or downlink service in the first duration, the wireless communication system enters the sleep state, and a first message is sent to the network device through the wireless communication system. The first message indicates that the terminal device is about to enter the sleep state.

In the first duration, a time slice in which the wireless communication system is in the sleep state is collectively referred to as the first time slice, and a time slice in which the wireless communication system is in the working state is collectively referred to as the second time slice. A 1^{st} time slice in the first duration is the first time slice (for example, a start moment of the first duration is the start moment of the first time slice) or the second time slice (for example, a start moment of the first duration is the start moment of the second time slice). The first time slice and the second time slice in the first duration alternate. For example, a start moment of a second time slice is an end moment of an adjacent first time slice, and an end moment of the second time slice is a start moment of another adjacent first time slice. For example, a start moment of a first time slice is an end moment of an adjacent second time slice, and an end moment of the first time slice is a start moment of another adjacent second time slice. The first duration is related to second duration. For example, a length of the first duration is determined based on a length of the second duration. For example, the length of the first duration and the length of the second duration are equal. Total duration of the one or more first time slices and the one or more second time slices and the first duration may be equal, that is, the first duration includes the one or more first time slices and the one or more second time slices, or may be unequal. For example, the first duration includes the one or more first time slices, the one or more second time slices, and another time period.

When the terminal device enters the sleep state and wakes up based on the PSM, the wireless communication system of the terminal device enters the listen state after the first moment. In this case, the wait time of the PSM is entered. When there is no uplink service or downlink service in the second duration (that is, the wait time) after the wireless communication system enters the listen state, the terminal device sends a second message to the network device through the wireless communication system. The second message indicates that the terminal device is about to enter the sleep state.

In the foregoing method, the terminal device may replace the wait time of the PSM with the first duration. In the wait time of the PSM, the wireless communication system is always in the listen state. However, in the first duration, the wireless communication system switches between the listen state and the sleep state at an interval of a period of time. That is, a proportion of a listen time in the wait time is 1, and a proportion of a listen time in the first duration is less than 1, for example, less than or equal to 0.5. This may be understood as to enable the wireless communication system to be in the sleep state as much as possible in the original wait time. This effectively reduces power consumption in the listen state, thereby reducing power consumption of the wireless communication system.

In a possible implementation, before the wireless communication system enters the sleep state and wakes up according to the first sleep scheduling strategy, the method further includes: obtaining a first delay required by a first service currently running on the terminal device (for example, a maximum delay that can be tolerated by the first service). A length of the first time slice and a length of the second time slice may be determined based on the first delay. For example, the length of the first time slice is greater than or equal to the first delay, and the length of the second time slice is equal to the first delay.

In the foregoing method, the length of the first time slice in which the system is in the sleep state in the first duration is determined based on a maximum delay that can be tolerated by a currently running service, for example, is equal to the delay. Therefore, a delay requirement of the service is effectively ensured, and user experience is not affected while power consumption is reduced.

In a possible implementation, a quantity of first time slices and a quantity of second time slices in the first duration are the same. For example, A pairs of first time slices are included. Alternatively, a quantity of first time slices and a quantity of second time slices in the first duration are different. For example, B pairs of first time slices and second time slices are included, and one first time slice or second time slice is included.

In a possible implementation, lengths of all first time slices in the first duration are equal, or lengths of at least two first time slices in the first duration are unequal. For example, when the wireless communication system has no uplink service or downlink service in a second time slice, a length of a previous time slice (which is a first time slice, where an end moment of the first time slice is a start moment of the second time slice) of the second time slice is less than a length of a next time slice (which is a first time slice, where a start moment of the first time slice is an end moment of the second time slice) of the second time slice, that is, the length of the first time slice may be gradually increased. Lengths of all second time slices in the first duration are equal, or lengths of at least two second time slices in the first duration are unequal.

In the foregoing method, the length of the first time slice may be gradually increased. If the length of the second time slice is fixed, a proportion of a sleep time in the first duration is approximately greater than 0.5, that is, a proportion of the listen state is approximately less than 0.5. Compared with that in a case in which the proportion of the listen time in the wait time is 1, in this case, power consumption in the listen state may be reduced by more than 50%, and implementation effect is better.

In a possible implementation, the length of the first time slice and the length of the second time slice in the first duration may be equal or unequal. For example, in the first duration, if lengths of all first time slices are equal, and lengths of all second time slices are equal, a length of each first time slice and a length of each second time slice are equal or unequal. For example, in the first duration, if lengths of all first time slices are equal, and lengths of at least two second time slices are unequal, the first duration may include a second time slice whose length is equal to that of the first time slice, or may include a second time slice whose length is unequal to that of the first time slice. For example, in the first duration, if lengths of all second time slices are equal, and lengths of at least two first time slices are unequal, the first duration may include a first time slice whose length is equal to that of the second time slice, or may include a first time slice whose length is unequal to that of the first time slice.

In the foregoing method, the first time slice and the second time slice in the first duration are set in various manners, and there is a wider range of application scenarios.

In a possible implementation, the terminal device and the network device may negotiate the first sleep scheduling strategy by using the PSM. In this case, that the wireless communication system enters the sleep state and wakes up according to the first sleep scheduling strategy includes: In the first duration, the terminal device may send a third message to the network device through the wireless communication system before a start moment of each first time slice. The third message indicates that the terminal device is about to enter the sleep state. That is, each time before the terminal device enters the sleep state (which may also be understood as that each time before the terminal device enters the first time slice from the second time slice, the terminal device is in the second time slice), the terminal device sends the third message to the network device in the current second time slice, to notify the network device that the terminal device is about to enter the sleep state. In addition, the terminal device may send a fourth message to the network device through the wireless communication system after a start moment of each second time slice. The fourth message indicates that the terminal device is in the working state. That is, each time after the terminal device enters the working state from the sleep state (which may also be understood as that each time after the terminal device enters the second time slice from the first time slice, the terminal device is in the second time slice), the terminal device sends the fourth message to the network device in the current second time slice, to notify the network device that the terminal device is woken up. For example, the third message may be obtained by setting a power management bit in a null data frame to 1, and the fourth message may be obtained by setting the power management bit in the null data frame to 0.

In the foregoing method, because most devices support a PSM protocol, negotiating the first sleep scheduling strategy based on the PSM has good universality.

In a possible implementation, the terminal device and the network device may negotiate the first sleep scheduling strategy by using a target wake time TWT mechanism. In this case, that the wireless communication system enters the sleep state and wakes up according to the first sleep scheduling strategy includes: sending a fifth message to the network device through the wireless communication system before the start moment of the first duration. The fifth message is a TWT setup frame in the TWT, and the TWT setup frame is used to negotiate a TWT schedule (which may correspond to the first duration). The TWT schedule may include a time slice (which may correspond to the first time slice) of a doze state and a time slice (which may correspond to the second time slice) of a TWT service period SP state.

In a possible implementation, the terminal device and the network device may negotiate the first sleep scheduling strategy by using a private negotiation mechanism. In this case, that the wireless communication system enters the sleep state and wakes up according to the first sleep scheduling strategy includes: sending a sixth message to the network device through the wireless communication system before the start moment of the first duration. The sixth message is a customized action frame negotiated between the terminal device and the network device, and the terminal device and the network device negotiate to use such an action frame to transmit control information between the terminal device and the network device.

In the foregoing method, the terminal device and the network device may negotiate the first sleep scheduling strategy by using an existing protocol/mechanism, or may negotiate the first sleep scheduling strategy by using a customized or private protocol/mechanism. This is applicable to a wider device range and a wider range of application scenarios.

In a possible implementation, the working state may include a transmit state, and the terminal device may send uplink data in the second time slice. The method further includes: When the wireless communication system is in the sleep state in the first time slice, if the terminal device detects second service data to be sent to the network device, the second service data may be buffered in a preset first queue. The wireless communication system may enter the listen state at the end moment of the first time slice. In this case, a next time slice (namely, a second time slice) of the first time slice is entered. The wireless communication system may enter the transmit state (for example, when a channel is idle) in the second time slice, and send the second service data in the first queue to the network device in the transmit state.

In a possible implementation, the working state may include a receive state, and the terminal device may receive downlink data in the second time slice. The method further includes: When the wireless communication system is in the sleep state in the first time slice, if the network device has service data to be sent to the terminal device, the service data may be buffered. The wireless communication system may enter the listen state at the end moment of the first time slice. In this case, a next time slice (namely, a second time slice) of the first time slice is entered. The wireless communication system may enter the receive state in the second time slice (for example, when it is detected that the downlink data is about to arrive). The wireless communication system may directly receive, in the receive state, third service data sent by the network device. Alternatively, the wireless communication system may first receive, in the receive state, a seventh message (indicating that the network device has service data to be sent to the terminal device) sent by the network device, then the wireless communication system switches to a transmit state and sends an eighth message (used to request the network device to send service data) to the network device, and then the wireless communication system switches to the receive state and receives fourth service data (for example, the foregoing third service data) sent by the network device.

In a possible implementation, before the wireless communication system enters the sleep state and wakes up according to the first sleep scheduling strategy, a traffic pattern of the first service running on the terminal device is that there are continuously packets in a concentrated period of time, then there are a very small quantity of packets or no packets in a period of time, and then there are continuously packets in a concentrated period of time. The first service is, for example, an online play service of a short video application, an online play service of a video application, an online reading service or an online book listening service of a reading application, or an online web page service of a browser application.

In a possible implementation, the terminal device is a station STA, the network device is a wireless access point AP, and the network device is configured to enable the terminal device to communicate with an internet through the wireless communication system. The network device may provide an internet access function to the terminal device in a hotspot mode. For example, both the network device and the terminal device are user equipment. Alternatively, the network device may serve as a gateway to provide an internet access function to the terminal device. For example, the network device is a gateway device such as a router, and the terminal device is user equipment.

According to a second aspect, this application provides a sleep scheduling method, applied to a terminal device. A status of a wireless communication system (for example, a wireless fidelity Wi-Fi system) of the terminal device includes a sleep state and a working state (including a listen state). The method includes: When a first condition is met, the terminal device may actively negotiate a first sleep scheduling strategy with a network device, and the wireless communication system of the terminal device may enter the sleep state and wake up (which may also be referred to as "perform sleep scheduling") according to the first sleep scheduling strategy. The first condition is that a ratio of a current wireless communication channel capacity to a first value (namely, an average traffic value of a first service currently running on the terminal device) is greater than or equal to a preset threshold. For example, when the first condition is met, it indicates that the current channel capacity is far greater than bandwidth of the current service. The first sleep scheduling strategy includes a first period. The first period includes a first time slice and a second time slice. The first sleep scheduling strategy further includes: The terminal device may proceed with a plurality of first periods. In each first period, the wireless communication system enters the sleep state at a start moment of the first time slice, and is in the sleep state in the first time slice, and the wireless communication system enters the listen state at a start moment of the second time slice, and is in the working state in the second time slice.

In the first period, a time slice in which the wireless communication system is in the sleep state is referred to as the first time slice, and a time slice in which the wireless communication system is in the working state is referred to as the second time slice. A 1^{st} time slice in the first period is the first time slice (for example, a start moment of the first period is the start moment of the first time slice) or the second time slice (for example, a start moment of the first period is the start moment of the second time slice). The first time slice and the second time slice in the first period do not overlap each other, and the first time slice in the first period may be before the second time slice (in this case, an end moment of the first time slice is the start moment of the second time slice), or the first time slice in the first period may be after the second time slice (in this case, the start moment of the first time slice is an end moment of the second time slice). Total duration of the first time slice and the second time slice and duration of the first period may be equal, that is, the first period includes the first time slice and the second time slice, or may be unequal. For example, the first period includes the first time slice, the second time slice, and another time period.

When the first condition is not met, the terminal device enters the sleep state and wakes up based on a PSM. After the terminal device transmits first service data with the network device through the wireless communication system, the wireless communication system enters the listen state. In this case, a wait time of the PSM is entered. For example, if a traffic pattern of the current service on the terminal device is that there are continuously packets, it is highly probable that there is an uplink service and/or a downlink service in first duration (that is, a wait time slice) after the wireless communication system enters the listen state, the terminal device may directly end the current wait time, and perform a service data transmission process with the network device through the wireless communication system. It is difficult to meet a condition that there is no uplink service or downlink service in the wait time slice, and therefore the sleep state cannot be entered.

In the foregoing method, the terminal device actively negotiates the first sleep scheduling strategy with the network device when the first condition is met, and enters the sleep state and wakes up according to the first sleep scheduling strategy. For example, the traffic pattern of the current service on the terminal device is that there are continuously packets. In this application, the terminal device may periodically switch between the listen state and the sleep state based on the first period. This resolves a problem that the sleep state cannot be entered in an original sleep mechanism (for example, the PSM), that is, the terminal device is enabled to enter the sleep state as much as possible, thereby reducing power consumption of the wireless communication system. In this application, the network device does not indicate the terminal device to periodically enter the sleep state and wake up, but the terminal device independently determines the first period, and actively negotiates the first sleep scheduling strategy with the network device. Therefore, the first period is more consistent with an actual service situation of the terminal device.

In a possible implementation, before the wireless communication system enters the sleep state and wakes up according to the first sleep scheduling strategy, the method further includes: obtaining a first delay required by the first service currently running on the terminal device (for example, a maximum delay that can be tolerated by the first service). A length of the first time slice and a length of the second time slice may be determined based on the first delay. For example, both the length of the first time slice and the length of the second time slice are equal to the first delay. The length of the first time slice and the length of the second time slice may be equal or unequal.

In the foregoing method, the length of the first time slice in which the system is in the sleep state in the first duration is determined based on a maximum delay that can be tolerated by a currently running service, for example, is equal to the delay. Therefore, a delay requirement of the service is effectively ensured, and user experience is not affected while power consumption is reduced.

In a possible implementation, the first sleep scheduling strategy includes a plurality of first periods. Lengths of all of the plurality of first periods are equal, or lengths of at least two of the plurality of first periods are unequal. In the plurality of first periods, lengths of first time slices in all the first periods are equal, or lengths of first time slices in at least two first periods are unequal. In the plurality of first periods, lengths of second time slices in all the first periods are equal, or lengths of second time slices in at least two first periods are unequal. For example, the lengths of all of the plurality of first periods are equal, and each first period includes one first time slice whose duration is N and one second time slice whose duration is N. Herein, N may be the first delay.

In the foregoing method, the plurality of first periods and the first time slice and the second time slice in the first period are set in various manners, and there is a wider range of application scenarios.

In a possible implementation, the terminal device and the network device may negotiate the first sleep scheduling strategy by using the PSM. In this case, that the wireless communication system enters the sleep state and wakes up according to the first sleep scheduling strategy includes: In the first sleep scheduling strategy, the terminal device may send a first message to the network device through the wireless communication system before a start moment of each first time slice. The first message indicates that the terminal device is about to enter the sleep state. That is, each time before the terminal device enters the sleep state (which may also be understood as that each time before the terminal device enters the first time slice from the second time slice, the terminal device is in the second time slice), the terminal device sends the first message to the network device in the current second time slice, to notify the network device that the terminal device is about to enter the sleep state. In addition, the terminal device may send a second message to the network device through the wireless communication system at a start moment of each second time slice. The second message indicates that the terminal device is in the working state. That is, each time after the terminal device enters the working state from the sleep state (which may also be understood as that each time after the terminal device enters the second time slice from the first time slice, the terminal device is in the second time slice), the terminal device sends the second message to the network device in the current second time slice, to notify the network device that the terminal device is woken up. For example, the first message may be obtained by setting a power management bit in a null data frame to 1, and the second message may be obtained by setting the power management bit in the null data frame to 0.

In the foregoing method, because most devices support a PSM protocol, negotiating the first sleep scheduling strategy based on the PSM has good universality.

In a possible implementation, the terminal device and the network device may negotiate the first sleep scheduling strategy by using a target wake time TWT mechanism. In this case, that the wireless communication system enters the sleep state and wakes up according to the first sleep scheduling strategy includes: sending a third message to the network device through the wireless communication system before the start moment of the first period. The third message is a TWT setup frame in the TWT, and the TWT setup frame is used to negotiate a TWT schedule (which may correspond to the first period). The TWT schedule may include a time slice (which may correspond to the first time slice) of a doze state and a time slice (which may correspond to the second time slice) of a TWT service period SP state.

In a possible implementation, the terminal device and the network device may negotiate the first sleep scheduling strategy by using a private negotiation mechanism. In this case, that the wireless communication system enters the sleep state and wakes up according to the first sleep scheduling strategy includes: sending a fourth message to the network device through the wireless communication system before the start moment of the first period. The fourth message is a customized action frame negotiated between the terminal device and the network device, and the terminal device and the network device negotiate to use such an action frame to transmit control information between the terminal device and the network device.

In the foregoing method, the terminal device and the network device may negotiate the first sleep scheduling strategy by using an existing protocol/mechanism, or may negotiate the first sleep scheduling strategy by using a customized or private protocol/mechanism. This is applicable to a wider device range and a wider range of application scenarios.

In a possible implementation, the working state may include a transmit state, and the terminal device may send uplink data in the second time slice. The method further includes: The wireless communication system enters the sleep state at the start moment of the first time slice. In the first time slice, if the terminal device detects second service data to be sent to the network device, the second service data may be buffered in a preset first queue. The wireless communication system enters the listen state at the end moment of the first time slice. In this case, a next time slice (namely, a second time slice) of the first time slice is entered. The wireless communication system may enter the transmit state (for example, when a channel is idle) in the second time slice, and send the service data in the first queue to the network device in the transmit state. The wireless communication system enters the sleep state at the end moment of the second time slice. In this case, a next time slice (namely, a first time slice) of the second time slice is entered.

In a possible implementation, the working state may include a receive state, and the terminal device may receive downlink data in the second time slice. The method further includes: The wireless communication system enters the sleep state at the start moment of the first time slice. In the first time slice, if the network device has service data to be sent to the terminal device, the service data may be buffered. The wireless communication system may enter the listen state at the end moment of the first time slice. In this case, a next time slice (namely, a second time slice) of the first time slice is entered. The wireless communication system may enter the receive state in the second time slice (for example, when it is detected that the downlink data is about to arrive). The wireless communication system may directly receive, in the receive state, third service data sent by the network device. Alternatively, the wireless communication system may first receive, in the receive state, a notification message (indicating that the network device has service data to be sent to the terminal device) sent by the network device, then the wireless communication system switches to a transmit state and sends a request message (used to request the network device to send service data) to the network device, and then the wireless communication system switches to the receive state and receives fourth service data (for example, the foregoing third service data) sent by the network device.

In a possible implementation, before the wireless communication system enters the sleep state and wakes up according to the first sleep scheduling strategy, the method further includes: obtaining first traffic information of the first service currently running on the terminal device, where the first traffic information may include at least one of the following: a delay required by the first service, a traffic type of the first service, and average traffic of the first service; and determining the first period based on the first traffic information. The method further includes: when the wireless communication system enters the sleep state and wakes up according to the first sleep scheduling strategy, if a second condition is met, re-obtaining second traffic information of a second service currently running on the terminal device, to re-determine a sleep scheduling strategy. The second condition is that a data amount of service data buffered in the first queue is greater than or equal to a queue threshold, and the first queue is used by the wireless communication system to buffer detected to-be-sent service data in the first time slice. In addition, if the second condition is met, the wireless communication system of the terminal device enters the transmit state, to send the service data in the first queue to the network device, and does not proceed with the first period.

In the foregoing method, when the wireless communication system enters the sleep state and wakes up according to the first sleep scheduling strategy, if the second condition is met, it indicates that an excessively large quantity of packets are accumulated and to be sent, and it may be considered that the previously obtained first traffic information may not be consistent with a current situation. Therefore, the terminal device may immediately wake up and send the accumulated packets in the first queue, and may re-trigger a decision of the sleep scheduling strategy (including re-obtaining traffic information of a currently running service), to ensure that the sleep scheduling strategy used by the terminal device is consistent with an actual service situation. This ensures user experience while reducing power consumption of the wireless communication system.

In a possible implementation, before the wireless communication system enters the sleep state and wakes up according to the first sleep scheduling strategy, a traffic pattern of the first service running on the terminal device is that there are continuously packets and a balanced quantity, and there is no case in which there are no packets or a small quantity of packets in a period of time. The first service is, for example, an online live broadcast service of a live broadcast application, an online call service of a network call application, or an online game service of a game application.

In a possible implementation, the terminal device is a station STA, the network device is a wireless access point AP, and the network device is configured to enable the terminal device to communicate with an internet through the wireless communication system. The network device may provide an internet access function to the terminal device in a hotspot mode. For example, both the network device and the terminal device are user equipment. Alternatively, the network device may serve as a gateway to provide an internet access function to the terminal device. For example, the network device is a gateway device such as a router, and the terminal device is user equipment.

According to a third aspect, this application provides a sleep scheduling method, applied to a terminal device. The method includes: The terminal device obtains a traffic type of a currently running first service, and determines whether the traffic type of the first service is a first type or a second type. When the terminal device determines that the traffic type of the first service is the first type, for example, a traffic pattern of the first service is that there are continuously packets in a concentrated period of time, then there are a very small quantity of packets or no packets in a period of time, and then there are continuously packets in a concentrated period of time, the terminal device may perform the sleep scheduling method provided in any one of the first aspect and the implementations of the first aspect. When the terminal device determines that the traffic type of the first service is the second type, for example, a traffic pattern of the first service is that there are continuously packets and a balanced quantity, and there is no case in which there are no packets or a small quantity of packets in a period of time, the terminal device may perform the sleep scheduling method provided in any one of the second aspect and the implementations of the second aspect.

According to a fourth aspect, this application provides a terminal device, including a transceiver, a processor, and a memory. The memory is configured to store a computer program, and the processor invokes the computer program, to enable the terminal device to perform the sleep scheduling method provided in any one of the first aspect, the second aspect, the third aspect, and the implementations of the first aspect, the second aspect, and the third aspect.

According to a fifth aspect, this application provides a computer storage medium. The computer storage medium stores a computer program. When the computer program is executed by a processor, the sleep scheduling method provided in any one of the first aspect, the second aspect, the third aspect, and the implementations of the first aspect, the second aspect, and the third aspect is performed.

According to a sixth aspect, this application provides a computer program product. When the computer program product is run on a device, the device is enabled to perform the sleep scheduling method provided in any one of the first aspect, the second aspect, the third aspect, and the implementations of the first aspect, the second aspect, and the third aspect.

According to a seventh aspect, this application provides an electronic device. The electronic device includes an apparatus for performing the method described in any aspect or implementation of this application. The electronic device is, for example, a chip.

It should be understood that descriptions of technical features, technical solutions, beneficial effects, or similar languages in this application do not imply that all features and advantages can be implemented in any single implementation. On the contrary, it may be understood that the descriptions of the features or the beneficial effects mean that at least one implementation includes specific technical features, technical solutions, or beneficial effects. Therefore, the descriptions of the technical features, the technical solutions, or the beneficial effects in this application do not necessarily refer to a same implementation. Further, the technical features, the technical solutions, and the beneficial effects described in this application may be combined in any appropriate manner. Persons skilled in the art may understand that this application may be implemented without one or more specific technical features, technical solutions, or beneficial effects in a specific implementation. In another implementation, additional technical features and beneficial effects may be further identified in a specific implementation that does not reflect all implementations.

### BRIEF DESCRIPTION OF DRAWINGS

The following describes the accompanying drawings used in this application.
FIG. 1A is a diagram of an architecture of a communication system according to this application;
FIG. 1B is a diagram of an architecture of another communication system according to this application;
FIG. 2 is a diagram of a hardware structure of a terminal device according to this application;
FIG. 3 is a diagram of a software architecture of a terminal device according to this application;
FIG. 4A and FIG. 4B are diagrams of some traffic models according to this application;
FIG. 5A and FIG. 5B are diagrams of some sleep/working processes according to this application;
FIG. 6A to FIG. 6C are diagrams of some sleep scheduling strategies according to this application;
FIG. 7A to FIG. 7C are diagrams of some other sleep/working processes according to this application;
FIG. 8 is a diagram of another traffic model according to this application;
FIG. 9A and FIG. 9B are diagrams of some other sleep/working processes according to this application;
FIG. 10 is a schematic flowchart of a sleep scheduling method according to this application;
FIG. 11 is a schematic flowchart of another sleep scheduling method according to this application;
FIG. 12 is a schematic flowchart of another sleep scheduling method according to this application; and
FIG. 13 is a diagram of a hardware structure of another terminal device according to this application.

### DESCRIPTION OF EMBODIMENTS

The following describes technical solutions in embodiments of this application with reference to accompanying drawings. Terms used in implementations of embodiments of this application are merely intended to explain specific embodiments of this application, but are not intended to limit this application.

In descriptions of embodiments of this application, unless otherwise specified, "/" means "or". For example, A/B may indicate A or B. The term "and/or" in this specification is merely an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or an implicit indication of a quantity of indicated technical features. Therefore, a feature limited by "first" and "second" may explicitly or implicitly include one or more features. In the descriptions of embodiments of this application, unless otherwise specified, "a plurality of" means two or more.

With continuous evolution of a wireless fidelity (wireless fidelity, Wi-Fi) protocol, a transmission rate of the Wi-Fi protocol is rapidly increased. However, power consumption of a terminal device remains high, affecting user experience.

In embodiments of this application, a status of a wireless communication system of the terminal device may include but is not limited to the following four states: a transmit (transmit, TX) state, a receive (receive, RX) state, a listen (listen) state, and a sleep (sleep) state. In the transmit state, the terminal device may send a data frame. In the receive state, the terminal device may receive a data frame. In the sleep state, the wireless communication system is powered off (does not work). In the listen state, the wireless communication system is not powered off, and does not receive or send a data frame, but continuously listens for energy on a wireless communication channel. States (for example, the transmit state, the receive state, and the listen state) other than the sleep state may be collectively referred to as a working state.

In embodiments of this application, the wireless communication system of the terminal device (or a wireless communication chip of the terminal device) may implement a related function by using a wireless communication technology. The wireless communication technology may be a technology used by two communication parties to transmit information through a radio wave, and may include but is not limited to a Wi-Fi technology, a Bluetooth technology, a near field communication (Near Field Communication, NFC) technology, a Wi-Fi aware (Wi-Fi Aware) technology, a general wireless communication technology, a wireless communication technology specified by the SparkLink (SparkLink) Alliance (for example, SparkLink low energy (SparkLink low energy, SLE) and SparkLink basic (SparkLink basic, SLB)), or the like. The wireless communication system may be named based on a supported wireless communication technology. For example, a wireless communication system that supports the Wi-Fi communication technology may be referred to as a Wi-Fi system, and a wireless communication system that supports the wireless communication technology specified by the SparkLink Alliance may be referred to as a SparkLink system. Wireless communication may be widely applied to various aspects such as file transfer, call audio transmission, media audio transmission, remote control, projection, and sensing of a surrounding device (for example, a smart vehicle, a smart terminal device, a smart home device, and a smart manufacturing device).

For ease of description, in the following embodiments, an example in which a wireless communication system of a terminal device is a Wi-Fi system that supports a Wi-Fi technology is used for description.

For example, through testing and analysis of Wi-Fi power consumption of frequently used applications (for example, top 20 applications) on the terminal device, proportions of the Wi-Fi system in the foregoing four states may be obtained: 0.8% in the transmit state, 9.2% in the receive state, 41% in the listen state, and 49% in the sleep state, and power consumption proportions contributed by the four states are 8% in the transmit state, 24% in the receive state, 64% in the listen state, and 4% in the sleep state. It may be understood that although a current is high when the Wi-Fi system is in the transmit state and the receive state, a time in which the Wi-Fi system is in the transmit state and the receive state is very short. Therefore, a power consumption proportion in the transmit state and the receive state is low. A current is very low when the Wi-Fi system is in the sleep state. Therefore, a power consumption proportion in the sleep state is very low. However, in the listen state used as an invalid state, the power consumption proportion is very high. Therefore, optimizing power consumption in the listen state is meaningful for Wi-Fi power consumption optimization.

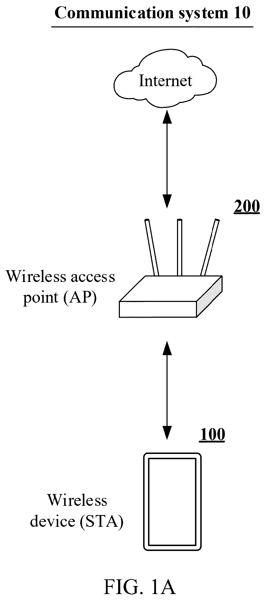

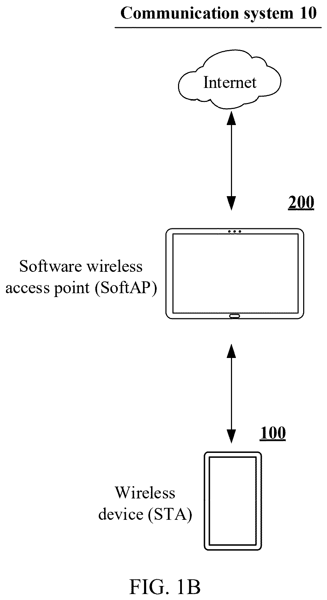

FIG. 1A and FIG. 1B are examples of diagrams of an architecture of a communication system 10. The communication system 10 may include a terminal device 100 and a network device 200. The terminal device 100 may be connected to the network device 200 in a wired and/or wireless manner. For example, the wired manner includes but is not limited to a high-definition multimedia interface (high-definition multimedia interface, HDMI), a universal serial bus (universal serial bus, USB), a coaxial cable, an optical fiber, or the like. For example, the wireless manner includes but is not limited to Bluetooth, Wi-Fi, a sidelink (sidelink), NFC, ultra-wideband (ultra-wideband, UWB), infrared, or the like.

**In** embodiments of this application, the terminal device 100 may be but is not limited to a mobile phone, a tablet computer, a handheld computer, a desktop computer, a laptop computer, an ultra-mobile personal computer (ultra-mobile personal computer, UMPC), a netbook, a cellular phone, a personal digital assistant (personal digital assistant, PDA), a smart home device such as a smart television, a smart camera, or a smart sound box, a wearable device such as a smart band, a smartwatch, or smart glasses, an extended reality (extended reality, XR) device such as an augmented reality (augmented reality, AR) device, a virtual reality (virtual reality, VR) device, or a mixed reality (mixed reality, MR) device, a vehicle-mounted device, or a smart city device. A specific type of the electronic device is not specifically limited in embodiments of this application.

**In** embodiments of this application, the network device 200 may be a router, a transmission/reception point (transmission/reception point, TRP), a relay device, or another access network device, or the network device 200 may be a terminal device. For a specific type example, refer to the descriptions of the terminal device 100 in the foregoing example.

**In** the communication system 10, the terminal device 100 may communicate with an internet through the network device 200, for example, perform Wi-Fi communication. This may also be referred to as that the network device 200 provides an internet access function to the terminal device 100. The terminal device 100 may send an uplink data packet to the network device 200, and the network device 200 may send a downlink data packet to the terminal device 100. In an implementation, when the terminal device 100 performs Wi-Fi communication with the internet through the network device 200, a Wi-Fi system of the terminal device 100 may enter a sleep state and wake up based on the sleep scheduling method provided in embodiments of this application, and the network device 200 may not enter the sleep state.

**In** embodiments of this application, the terminal device 100 may be referred to as a station (station, STA), and the network device 200 may be referred to as a wireless access point (access point, AP). When the network device 200 is a terminal device, the network device 200 may provide the internet access function to the terminal device 100 in a hotspot mode. In this case, the network device 200 may also be referred to as a software wireless access point (software access point, SoftAP). The network device 200 may be a physical AP, or may be a virtual wireless access point (virtual access point, VAP). The VAP is, for example, a driver network adapter.

For example, as shown in FIG. 1A, the terminal device 100 is a mobile phone, the network device 200 is a router, and the network device 200 may serve as an AP to provide the internet access function, for example, a Wi-Fi internet access function, to the terminal device 100 serving as a STA.

For example, as shown in FIG. 1B, the terminal device 100 is a mobile phone, the network device 200 is a tablet computer, and the network device 200 may serve as a SoftAP to provide the internet access function, for example, a Wi-Fi internet access function, to the terminal device 100 serving as a STA.

It may be understood that forms and quantities of terminal devices 100 and network devices 200 shown in FIG. 1A and FIG. 1B are merely used as examples. This is not limited in embodiments of this application.

The following describes the terminal device 100 in embodiments of this application by using an example.

It may be understood that the structure shown in embodiments of this application does not constitute a specific limitation on the terminal device 100. In some other embodiments of this application, the terminal device 100 may include more or fewer components than those shown in the figure, or some components may be combined, or some components may be split, or different component arrangements may be used. The components shown in the figure may be implemented by hardware, software, or a combination of software and hardware.

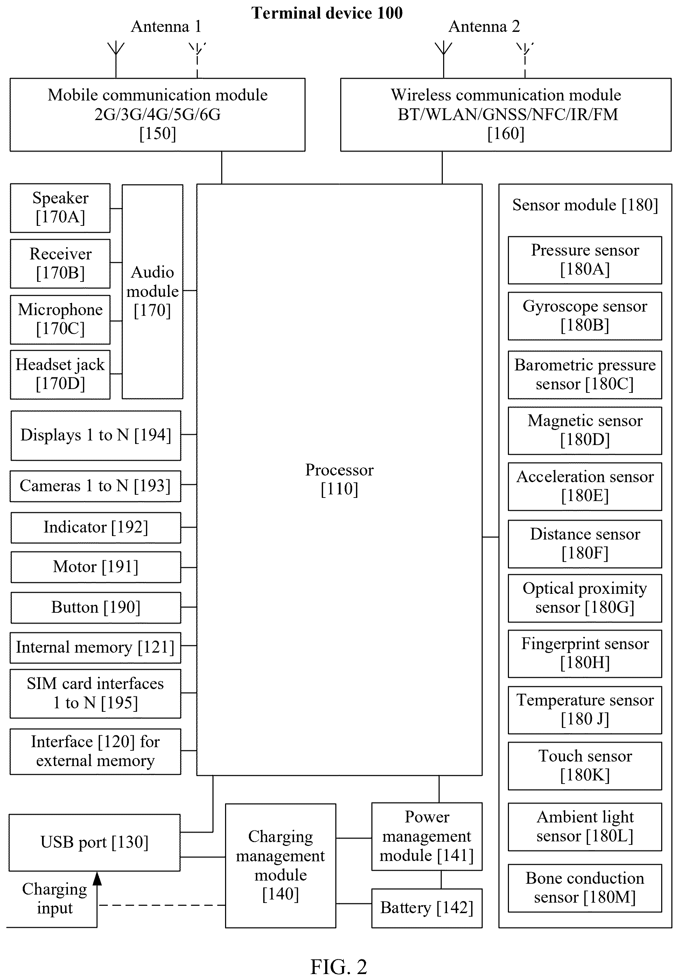

FIG. 2 is a diagram of a hardware structure of a terminal device 100 according to an embodiment of this application.

As shown in FIG. 2, the terminal device 100 may include a processor 110, an interface 120 for external memory, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In an implementation, the memory in the processor 110 is a cache. The memory may store instructions or data just used or cyclically used by the processor 110. If the processor 110 needs to use the instructions or the data again, the instructions or the data may be directly invoked from the memory. This avoids repeated access and reduces a wait time of the processor 110, thereby improving system efficiency.

In an implementation, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The charging management module 140 is configured to receive a charging input from a charger. The charger may be a wireless charger or a wired charger. In some implementations of wired charging, the charging management module 140 may receive a charging input from a wired charger through the USB port 130. In some implementations of wireless charging, the charging management module 140 may receive a wireless charging input through a wireless charging coil of the terminal device 100. The charging management module 140 may supply power to the terminal device 100 through the power management module 141 while charging the battery 142.

The power management module 141 is configured to be connected to the battery 142, the charging management module 140, and the processor 110. The power management module 141 receives an input from the battery 142 and/or an input from the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (leakage or impedance). In another implementation, the power management module 141 may alternatively be disposed in the processor 110. In another implementation, the power management module 141 and the charging management module 140 may alternatively be disposed in a same device.

A wireless communication function of the terminal device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal device 100 may be configured to cover one or more communication frequency bands. Different antennas may be further reused to improve antenna utilization. For example, the antenna 1 may be reused as a diversity antenna in a wireless local area network. In another implementation, the antenna may be used in combination with a tuning switch.

The mobile communication module 150 may provide a wireless communication solution that is applied to the terminal device 100 and that includes a second generation (second generation, 2G) mobile communication technology/third generation (third generation, 3G) mobile communication technology/fourth generation (fourth generation, 4G) mobile communication technology/fifth generation (fifth generation, 5G) mobile communication technology/sixth generation (sixth generation, 6G) mobile communication technology. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In an implementation, at least some functional modules in the mobile communication module 150 may be disposed in the processor 110. In an implementation, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium or highfrequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video on the display 194. In an implementation, the modem processor may be an independent device. In another implementation, the modem processor may be independent of the processor 110, and is disposed in a same device as the mobile communication module 150 or another functional module.

The wireless communication module 160 may provide a wireless communication solution that is applied to the terminal device 100 and that includes a wireless local area network (wireless local area network, WLAN) (for example, Wi-Fi), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices into which at least one communication processing module is integrated. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2. In an implementation, at least some functional modules in the wireless communication module 160 may be disposed in the processor 110. In an implementation, at least some functional modules in the wireless communication module 160 may be disposed in a same device as at least some modules in the processor 110.

In embodiments of this application, the wireless communication module 160 may include a Wi-Fi communication module, a SparkLink communication module, and the like. The wireless communication module 160 or any communication module (for example, the Wi-Fi communication module) in the wireless communication module 160 may include the foregoing transmit state, receive state, listen state, and sleep state. It may be understood that the wireless communication module 160 or any communication module (for example, the Wi-Fi communication module) in the wireless communication module 160 may independently enter the sleep state without affecting running of another module in the terminal device 100.

The camera 193 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In an implementation, the terminal device 100 may include one or N cameras 193, where N is a positive integer greater than 1.

The digital signal processor is configured to process a digital signal, and may process another digital signal in addition to the digital image signal. For example, when the terminal device 100 selects a frequency, the digital signal processor is configured to perform Fourier transform or the like on energy of the frequency.

The video codec is configured to compress or decompress a digital video. The terminal device 100 may support one or more video codecs. In this way, the terminal device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor that quickly processes input information with reference to a structure of a biological neural network, for example, a mode of transmission between human brain neurons, and may further continuously perform self-learning. Applications such as intelligent cognition of the terminal device 100, for example, image recognition, facial recognition, speech recognition, and text understanding, may be implemented through the NPU.

The interface 120 for external memory may be configured to be connected to an external memory card, for example, a micro SD card, to extend a storage capability of the terminal device 100. The external memory card communicates with the processor 110 through the interface 120 for external memory, to implement a data storage function. For example, files such as music and videos are stored in the external memory card.

The internal memory 121 may be configured to store computer-executable program code. The executable program code includes instructions. The internal memory 121 may include a program storage area and a data storage area. The program storage area may store an operating system, an application required by at least one function (for example, a sound play function or an image play function), and the like. The data storage area may store data (for example, audio data or an address book) created in a process of using the terminal device 100, and the like. In addition, the internal memory 121 may include a high-speed random access memory, and may further include a non-volatile memory, for example, at least one magnetic disk storage device, a flash memory, or a universal flash storage (universal flash storage, UFS). The processor 110 runs the instructions stored in the internal memory 121 and/or the instructions stored in the memory disposed in the processor, to perform various functional applications and data processing of the terminal device 100.

The terminal device 100 may implement an audio function through the audio module 170, the speaker 170A, the receiver 170B, the microphone 170C, the headset jack 170D, the application processor, and the like. The terminal device 100 may alternatively implement an audio function, for example, music play and recording, through a connected Bluetooth device.

The audio module 170 is configured to convert digital audio information into an analog audio signal for output, and is further configured to convert an analog audio input into a digital audio signal. The audio module 170 may be further configured to encode and decode an audio signal. In an implementation, the audio module 170 may be disposed in the processor 110, or some functional modules in the audio module 170 are disposed in the processor 110.

The speaker 170A, also referred to as a "horn", is configured to convert an audio electrical signal into a sound signal. The terminal device 100 may be configured to listen to music or answer a call in a hands-free mode through the speaker 170A.

The receiver 170B, also referred to as an "earpiece", is configured to convert an audio electrical signal into a sound signal. When a call is answered or voice information is listened to by using the terminal device 100, the receiver 170B may be put close to a human ear to listen to a voice.

The microphone 170C, also referred to as a "mike" or a "mic", is configured to convert a sound signal into an electrical signal. When making a call or sending a voice message, a user may place the mouth of the user near the microphone 170C to make a sound, to input a sound signal to the microphone 170C. At least one microphone 170C may be disposed in the terminal device 100. In another implementation, two microphones 170C may be disposed in the terminal device 100, to collect a sound signal and implement a noise reduction function. In another implementation, three, four, or more microphones 170C may alternatively be disposed in the terminal device 100, to collect a sound signal, implement noise reduction, and identify a sound source, so as to implement a directional recording function and the like.

The pressure sensor 180A is configured to sense a pressure signal, and may convert the pressure signal into an electrical signal. In an implementation, the pressure sensor 180A may be disposed on the display 194. There are many types of pressure sensors 180A, for example, a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The terminal device 100 determines pressure strength based on a capacitance change. When a touch operation is performed on the display 194, the terminal device 100 detects strength of the touch operation through the pressure sensor 180A. The terminal device 100 may further calculate a touch position based on a detected signal of the pressure sensor 180A. In an implementation, touch operations that are performed at a same touch position but have different touch operation strength may correspond to different operation instructions. For example, when a touch operation whose touch operation strength is less than a first pressure threshold is performed on an SMS message application icon, an instruction for viewing an SMS message is performed. When a touch operation whose touch operation strength is greater than or equal to the first pressure threshold is performed on the SMS message application icon, an instruction for creating a new SMS message is performed.

The gyroscope sensor 180B may be configured to determine a motion posture of the terminal device 100. The barometric pressure sensor 180C is configured to measure barometric pressure. The magnetic sensor 180D includes a Hall sensor. The acceleration sensor 180E may detect magnitudes of acceleration of the terminal device 100 in various directions (usually on three axes). The distance sensor 180F is configured to measure a distance. The optical proximity sensor 180G may include, for example, a light-emitting diode (LED) and an optical detector, for example, a photodiode. The light-emitting diode may be an infrared light-emitting diode. The ambient light sensor 180L is configured to sense ambient light brightness. The fingerprint sensor 180H is configured to collect a fingerprint. The terminal device 100 may use a feature of the collected fingerprint to implement fingerprint-based unlocking, application lock access, fingerprint-based photographing, fingerprint-based call answering, and the like. The temperature sensor 180J is configured to detect a temperature. The bone conduction sensor 180M may obtain a vibration signal.

The touch sensor 180K is also referred to as a "touch device". The touch sensor 180K may be disposed on the display 194, and the touch sensor 180K and the display 194 form a touchscreen, which is also referred to as a "touch control screen". The touch sensor 180K is configured to detect a touch operation performed on or near the touch sensor. The touch sensor may transmit the detected touch operation to the application processor to determine a type of the touch event. A visual output related to the touch operation may be provided through the display 194. In another implementation, the touch sensor 180K may alternatively be disposed on a surface of the terminal device 100 at a position different from that of the display 194.

The button 190 includes a power button, a volume button, and the like. The button 190 may be a mechanical button, or may be a touch button. The terminal device 100 may receive a button input, and generate a button signal input related to user settings and function control of the terminal device 100. The motor 191 may generate a vibration prompt. The indicator 192 may be an indicator light, and may be configured to indicate a charging status and a power change, or may be configured to indicate a message, a missed call, a notification, and the like.

A layered architecture, an event-driven architecture, a microkernel architecture, a microservice architecture, or a cloud architecture may be used for a software system of the terminal device 100. For example, a software system of the layered architecture may be an Android (Android) system, a Harmony (Harmony) operating system (operating system, OS), or another software system. In embodiments of this application, a software structure of the terminal device 100 is described by using the layered architecture as an example.

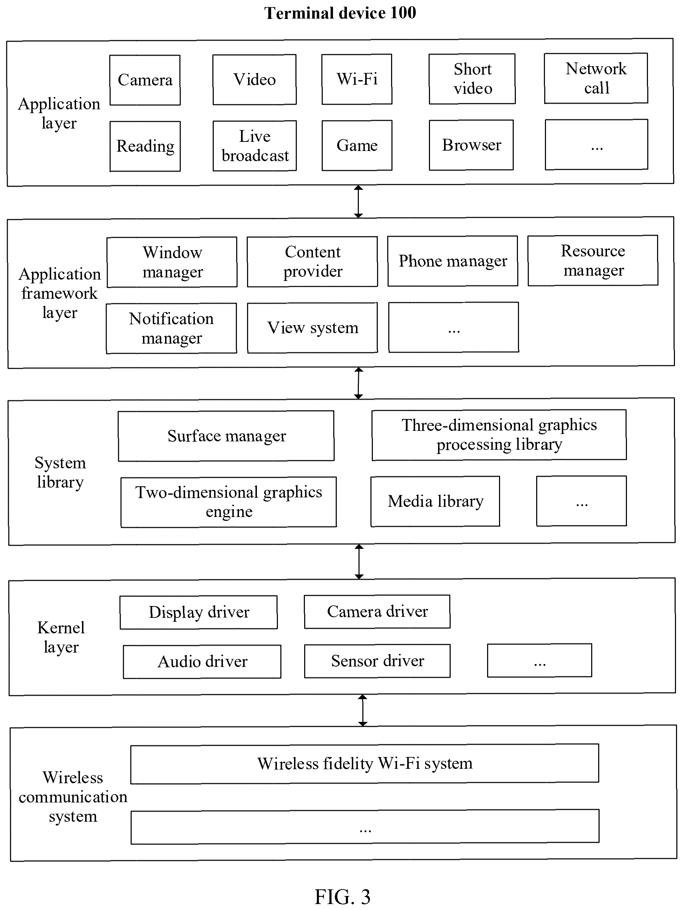

FIG. 3 is a diagram of a software architecture of a terminal device 100 according to an embodiment of this application.

In a layered architecture, software is divided into several layers, and each layer has a clear role and task. The layers communicate with each other through a software interface. In an implementation, a software system of the terminal device 100 is divided into five layers: an application layer, an application framework layer, a system library, a kernel layer, and a wireless communication system from top to bottom.

The application layer may include a series of application packages.

As shown in FIG. 3, the application packages may include applications such as camera, video, Wi-Fi, short video, network call (for example, voice call or video call in a chat application), reading, live broadcast, game, and browser. The application in this embodiment of this application may be replaced with other software such as an applet or an atomic service.

The application framework layer provides an application programming interface (application programming interface, API) and a programming framework for applications at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of a display, determine whether there is a status bar, lock a screen, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying text and a control for displaying a picture. The view system may be configured to construct an application. A display interface may include one or more views. For example, a display interface including an SMS message notification icon may include a view for displaying text and a view for displaying a picture.

The phone manager is configured to provide a communication function for the terminal device 100, for example, management of a call status (including answering, declining, or the like).

The resource manager provides various resources such as a localized character string, an icon, a picture, a layout file, and a video file to an application.

The notification manager enables an application to display notification information in the status bar, may be configured to convey a notification message, and may automatically disappear after a short pause without requiring user interaction. For example, the notification manager is configured to: notify download completion, provide a message notification, and the like. The notification manager may alternatively be a notification that appears in the status bar at the top of the system in a form of a graph or scroll bar text, for example, a notification for an application running in background, or a notification that appears on the screen in a form of a dialog window. For example, text information is prompted in the status bar, an alert tone is made, the terminal device 100 vibrates, or an indicator blinks.

As shown in FIG. 3, the system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to: manage a display subsystem, and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. As shown in FIG. 3, the kernel layer may include but is not limited to at least one of the following: a display driver, a camera driver, an audio driver, or a sensor driver.

The wireless communication system may be configured to perform a wireless communication process. As shown in FIG. 3, the wireless communication system may include but is not limited to a Wi-Fi system, a SparkLink system (not shown), and the like. The Wi-Fi system is configured to perform wireless communication by using a Wi-Fi technology. The SparkLink system is configured to perform wireless communication by using an SLE or SLB technology. For example, a real-time service of an application 1 at the application layer may be implemented through the Wi-Fi system. A data packet of the application 1 may be sent to the Wi-Fi system after being processed by the application framework layer, the system library, and the kernel layer, and then sent to a network device 200 by the Wi-Fi system. The Wi-Fi system may further receive a data packet sent by the network device 200, and send the data packet to the application 1 after processing by the kernel layer, the system library, and the application framework layer is performed.

In embodiments of this application, the wireless communication system/any communication system (for example, the Wi-Fi system) in the wireless communication system may include the foregoing transmit state, receive state, listen state, and sleep state. It may be understood that the wireless communication system/any communication system (for example, the Wi-Fi system) in the wireless communication system may independently enter the sleep state without affecting running of another module in the terminal device 100.

It may be understood that the terminal device 100 shown in FIG. 2 may correspond to the terminal device 100 shown in FIG. 3. For example, the application layer, the application framework layer, the system library layer and the kernel layer shown in FIG. 3 belong to the application processor shown in FIG. 2, and the wireless communication system shown in FIG. 3 corresponds to the wireless communication module 160 shown in FIG. 2. This is not limited thereto. Another software architecture of the terminal device 100 may correspond to the hardware structure shown in FIG. 2. Another hardware structure of the terminal device 100 may correspond to the software architecture shown in FIG. 3. For example, the terminal device 100 may include a system on chip (system on chip, SoC) and a Wi-Fi communication chip. The application layer, the application framework layer, the system library layer, and the kernel layer shown in FIG. 3 belong to the SoC, and the wireless communication system shown in FIG. 3 corresponds to the Wi-Fi communication chip. The Wi-Fi communication chip may be integrated with the SoC, or may exist independently. For example, the terminal device 100 may further include a processor and a transceiver (including a Wi-Fi transceiver). The application layer, the application framework layer, the system library layer, and the kernel layer shown in FIG. 3 belong to the processor, and the wireless communication system shown in FIG. 3 corresponds to the transceiver.

With reference to a video play scenario in a video application implemented based on a Wi-Fi network, the following describes working procedures of software and hardware of the terminal device 100 by using an example.

When the touch sensor 180K receives a touch operation, a corresponding hardware interrupt is sent to the kernel layer. The kernel layer processes the touch operation into an original input event (including touch coordinates, a timestamp of the touch operation, and other information). The original input event is stored at the kernel layer. The application framework layer obtains the original input event from the kernel layer, and identifies a control corresponding to the input event. For example, the touch operation is a touch tap operation, and a control corresponding to the tap operation is a video play control of the video application. The video application invokes an interface at the application framework layer, and then invokes the Wi-Fi system in the wireless communication system to send a request message to the network device 200. The request message is used to request to obtain to-be-played video data. In addition, the Wi-Fi system may receive the video data sent by the network device 200, and send the video data to the video application at the application layer, so that the video application plays the video data.

A power save mode (power save mode, PSM) sleep mechanism is defined in a Wi-Fi protocol. A basic principle is as follows:
(1) An AP may send a beacon (Beacon) frame to a STAin a specific period. The specific period may be referred to as a target beacon transmission time (target beacon transmission time, TBTT). The TBTT is, for example, 100 milliseconds (millisecond, ms). For example, after the STA and the AP are powered on, the AP may send the beacon frame to the STA in a period of the TBTT.
(2) The STA and the AP negotiate a listen interval (Listen Interval) during network access negotiation. After entering a sleep state, the STA wakes up and listens for the beacon frame at an interval of TBTTs whose quantity is the listen interval. In addition, the AP allocates different identifiers (identifiers, ID) to different STAs. The identifier may be referred to as an association identifier (association ID, AID). A value of the listen interval is a positive integer. For example, the listen interval is 1 by default.
(3) When the STA has no to-be-sent service data, a data packet 1 may be sent to the AP. The AP may learn, based on the data packet 1, that the STA enters the sleep state. The data packet 1 may also be referred to as a sleep frame. For example, the data packet 1 may be obtained by the STA by setting a power management bit (Power Management Bit) in a media access control (media access control, MAC) frame header of any data packet to 1. For example, the data packet 1 may be a null data (Null Data) frame.
(4) When the AP has service data to be sent to a target STA, the service data is buffered first. In addition, the AP may send a state-1 beacon frame to the target STA. The target STA may learn, based on the state-1 beacon frame, that the AP has data to be sent to the target STA. For example, the state-1 beacon frame may be obtained by setting a bit (Bit) corresponding to an AID of the target STA to 1 in a bitmap (Bitmap) of a traffic indication map (traffic indication map, TIM).
(5) The STA may wake up and listen for the beacon frame based on the negotiated listen interval. When the state-1 beacon frame is received, it may be learned that there is to-be-received downlink data. In this case, the STA may send a data packet 2 to the AP to request data. The data packet 2 may also be referred to as a request frame. For example, the data packet 2 is a power save poll (power save poll, PS-Poll) frame.
(6) The AP may obtain corresponding buffered data based on an AID in the PS-Poll frame, to send the buffered data to a STA corresponding to the AID.

Based on the PSM sleep mechanism, currently, a low-power sleep strategy during transmission of a Wi-Fi data frame by a terminal device is as follows:
(1) For an uplink service (that is, a STA sends service data to an AP), when an application 2 needs to transmit a packet through a Wi-Fi system, the packet may be sent to the Wi-Fi system. When receiving the packet in a non-sleep state, the Wi-Fi system may send the packet to the AP in a transmit state. When receiving the packet in a sleep state, the Wi-Fi system may wake up to send the packet to the AP in a transmit state.
(2) For a downlink service (that is, the AP sends service data to the STA), because the STA cannot predict when the AP sends downlink data, a wait time *T_{wait}* may be set. After the STA completes data transmission with the AP (for example, after the STA completes sending of uplink service data to the AP), the STA may wait for *T_{wait}* (the Wi-Fi system is in a listen state in *T_{wait}*)*.* If the AP has, in *T_{wait}*, no downlink data to be sent to the STA, the STA may send a sleep frame to the AP, and enter the sleep state. After entering the sleep state, the STA may wake up and listen for a beacon frame based on a negotiated listen interval. When the AP has downlink data to be sent to the STA, a state-1 beacon frame may be sent to the STA. The STA may send a request frame to the AP based on the state-1 beacon frame, so that the AP sends the downlink service data to the STA based on the request frame.

Traffic models in different service scenarios may be different. The following shows examples of two common traffic models. The traffic model in the following example is illustrated by using downlink traffic of a service as an example. Uplink traffic is similar. Details are not described.

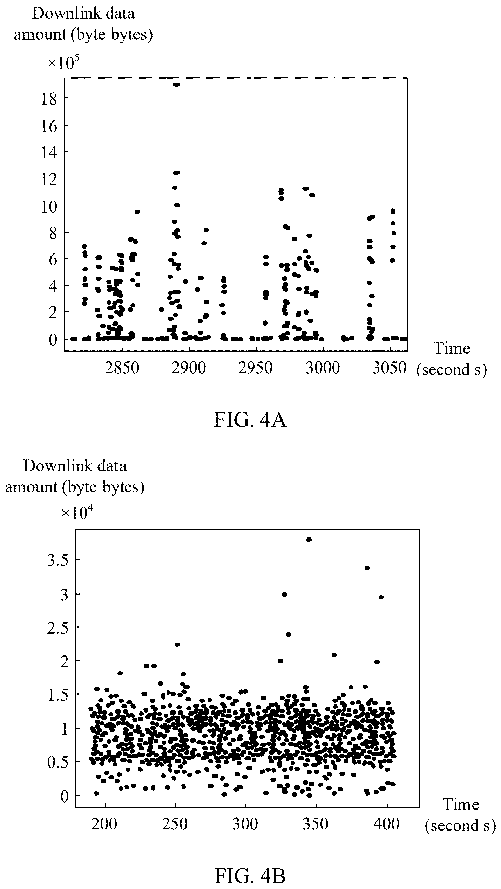

FIG. 4A is an example of a diagram of a pulsed traffic model in a service scenario 1. For example, an online service scenario in a short video application, a video application, a reading application, or a browser application is the service scenario 1. As shown in FIG. 4A, a horizontal axis represents time in a unit of second (second, s), and a vertical axis represents a downlink data amount in a unit of byte (bytes).

As shown in FIG. 4A, a pattern of downlink traffic in the service scenario 1 is that there are continuously packets in a concentrated period of time, then there are a very small quantity of packets or no packets in a period of time, then there are continuously packets in a concentrated period of time, then there are a very small quantity of packets or no packets in a period of time, and so on. For example, in FIG. 4A, there are a large quantity of packets between approximately 2820s and 2860s, with a data amount mainly fluctuating within an interval of (0, 8 × 10⁵] bytes, then there are no packets between approximately 2860s and 2880s, then there are a large quantity of packets between approximately 2880s and 2885s, with a data amount mainly fluctuating within an interval of (0,12 × 10⁵] bytes, then there are no packets between approximately 2885s and 2905s, then there are a large quantity of packets between approximately 2905s and 2925s, with a data amount mainly fluctuating within an interval of (0, 7 × 10⁵] bytes, then there are a small quantity of packets between 2925s and 2955s, then there are a large quantity of packets between approximately 2955s and 3000s, with a data amount mainly fluctuating within an interval of (0,12 × 10⁵] bytes, and then there are no packets between approximately 3000s and 3030s.

FIG. 4B is an example of a diagram of a continuous traffic model in a service scenario 2. For example, an online service scenario in a live broadcast application, a network call application, or a game application is the service scenario 2. As shown in FIG. 4B, a horizontal axis represents time in a unit of second (second, s), and a vertical axis represents a downlink data amount in a unit of byte (bytes).

As shown in 4B, a pattern of downlink traffic in the service scenario 2 is that there are continuously packets and a balanced data amount, and there is no case in which there are no packets or a small quantity of packets in a period of time. For example, in FIG. 4B, there are continuously packets between 100s and 400s, with a data amount fluctuating within an interval of (0, 2 × 10⁴] bytes.

Based on the foregoing low-power sleep strategy, the following describes sleep/working processes of a Wi-Fi system in the foregoing two service scenarios by using an example. In the following embodiment, an example in which listen interval=1, that is, a STA listens for a beacon frame at an interval of one TBTT, is used for description.

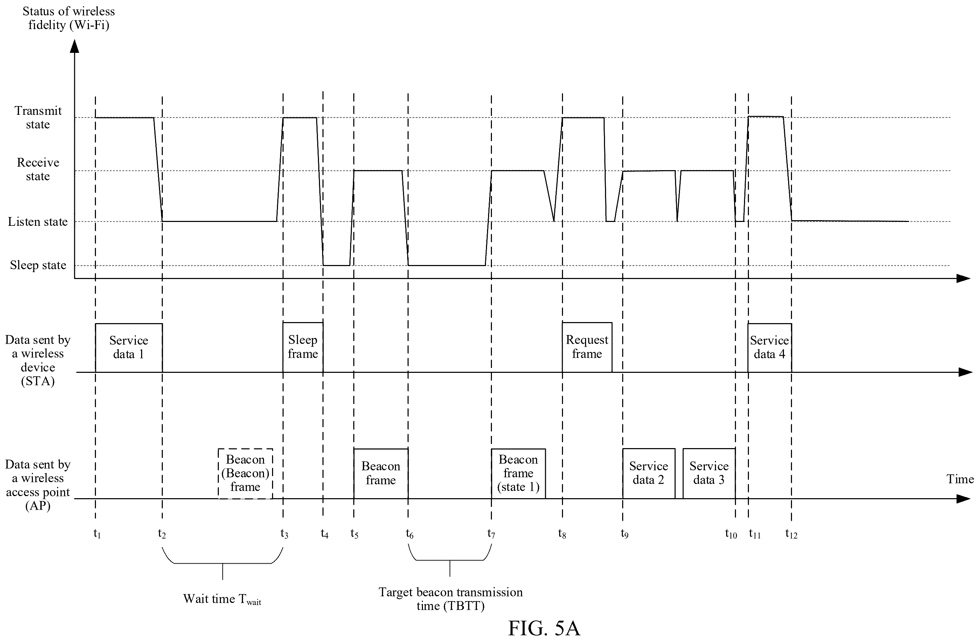

FIG. 5A shows an example of a sleep/working process of a Wi-Fi system in a service scenario 1.

As shown in FIG. 5A, in a time from *t*₁ to *t*₂, the Wi-Fi system of a STA sends a last piece of service data 1 to an AP in a transmit state, and then enters a listen state from the transmit state. The STA may wait for *T_{wait}* in the listen state. In *T_{wait},* the STA may receive a beacon frame sent by the AP, or may not receive a beacon frame. If the AP has, in *T_{wait},* no downlink service data to be sent to the STA, for example, the STA does not receive a state-1 beacon frame or does not receive downlink service data in *T_{wait},* the STA may send a sleep frame to the AP in the transmit state at a time *t*₃ (namely, a time after *T_{wait}* elapses after *t*₂), to notify the AP that the STA is to enter a sleep state. At a time *t*₄ after the sleep frame is sent, the STA may switch to the sleep state from the transmit state.

It may be understood that after the STA and the AP are powered on, the AP may send the beacon frame to the STA in a period of a TBTT. After the time *t*₄, it is assumed that an arrival time of a next beacon frame is a time *t*₅. Therefore, at the time *t*₅, the STA may enter a receive state from the sleep state, and receive, in the receive state, a beacon frame sent by the AP. It is assumed that a beacon frame received in a time from *t*₅ to *t*₆ is not a state-1 beacon frame, and the STA learns, based on the beacon frame, that the AP has no service data to be sent to the STA. Therefore, at the time *t*₆, the STA enters the sleep state from the receive state. At a time *t*₇ after the TBTT elapses after *t*₆, the STA may enter the receive state from the sleep state, and receive, in the receive state, a beacon frame sent by the AP. It is assumed that the currently received beacon frame is a state-1 beacon frame, and the STA learns, based on the beacon frame, that the AP has service data to be sent to the STA. Therefore, the STA no longer enters the sleep state, but enters the listen state, and enters the transmit state from the listen state when a Wi-Fi channel is idle (it is assumed that the channel is idle currently). When entering the transmit state (that is, at a time *t*₈), the STA may send a request frame to the AP, to request downlink data from the AP. After sending the request frame, the STA may enter the listen state, and enter the receive state when the downlink data is about to arrive.

It is assumed that the downlink data to be sent by the AP to the STA includes service data 2 and service data 3. At a time *t*₉, the STA enters the receive state, and from the time *t*₉ to a time *t*₁₀, the STA sequentially receives the service data 2 and the service data 3 that are sent by the AP. After the time *t*₁₀, the STA may enter the listen state. It is assumed that the STA has an uplink data packet to be sent to the AP. Therefore, the STA may enter the transmit state from the listen state, and send service data 4 to the AP in a time from *t*₁₁ to *t*₁₂. It is assumed that the service data 4 is a last piece of service data sent by the STA. Therefore, the STA may enter the listen state at the time *t*₁₂. The STA may continue to wait for *T_{wait}* in the listen state. A subsequent process is similar. Details are not described.

It may be learned from FIG. 5A that if the AP has, in *T_{wait},* no downlink service data to be sent to the STA, no any "gain" is brought in the listen state of the STA in the wait time *T_{wait},* and power is wasted in *T_{wait}.* It may be understood that currently, to ensure real-time service experience, most STAs set *T_{wait}* to hundreds of milliseconds (millisecond, ms). In addition, in the service scenario 1, a probability that the AP has, in *T_{wait},* no downlink service data to be sent to the STA is high, and therefore a large amount of power is wasted in each case of *T_{wait}.* However, if the wait time *T_{wait}* does not exist, that is, after sending the last piece of service data to the AP, the STA directly sends the sleep frame to the AP and enters the sleep state, there is the following problem in this manner: If the AP has downlink data to be sent to the STA, the STA can receive a state-1 beacon frame only after a next TBTT (which is actually TBTTs whose quantity is the listen interval) after entering the sleep state, and there is an average delay of dozens of milliseconds to hundreds of milliseconds, affecting real-time experience of some delay-sensitive services.

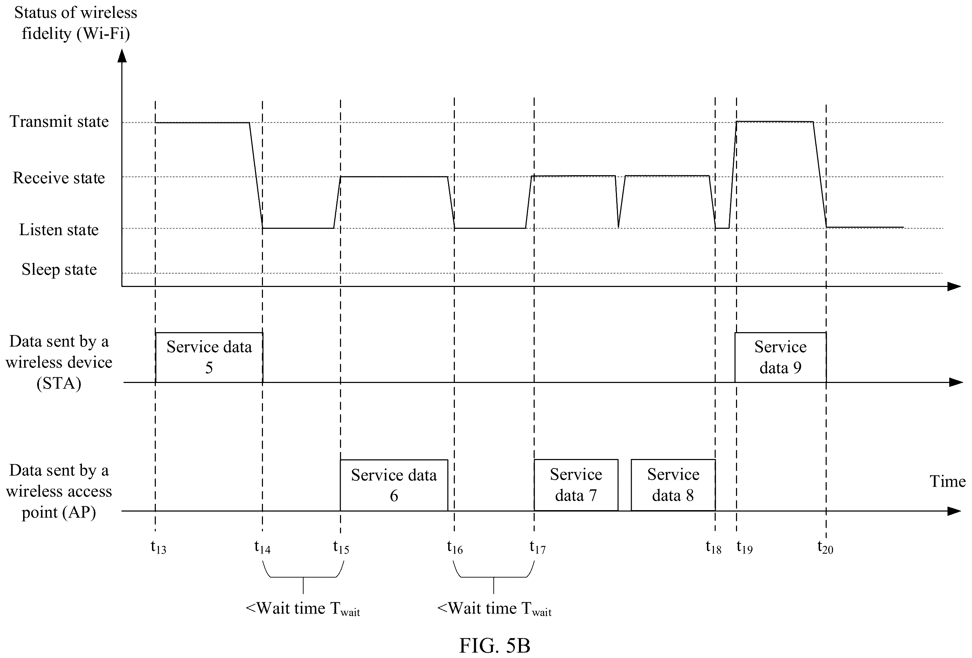

FIG. 5B shows an example of a sleep/working process of a Wi-Fi system in a service scenario 2.

As shown in FIG. 5B, in a time from *t*₁₃ to *t*₁₄, the Wi-Fi system of a STA sends a last piece of service data 5 to an AP in a transmit state, and then enters a listen state from the transmit state. The STA may wait for *T_{wait}* in the listen state. When the AP has, in *T_{wait},* downlink service data to be sent to the STA, the AP may directly send the data. When service data 6 sent by the AP is about to arrive, the STA may enter a receive state from the listen state. The STA may receive, in a time from *t*₁₅ to *t*₁₆, the service data 6 sent by the AP, and enter the listen state when the receiving is completed. An interval between the time *t*₁₅ and the time *t*₁₄ is less than *T_{wait}.* The STA may continue to wait for *T_{wait}* in the listen state. When downlink service data sent by the AP is about to arrive in *T_{wait},* the STA may enter the receive state from the listen state, and the STA may sequentially receive, in a time from *t*₁₇ to *t*₁₈, service data 7 and service data 8 that are sent by the AP. An interval between the time *t*₁₇ and the time *t*₁₆ is less than *T_{wait}*. After the time *t*₁₈, the STA may enter the listen state. Then, when the STA has an uplink data packet to be sent to the AP, the STA may enter the transmit state from the listen state, and send service data 9 to the AP in a time from *t*₁₉ to *t*₂₀. It is assumed that the service data 9 is a last piece of service data sent by the STA. Therefore, the STA may enter the listen state at the time *t*₂₀. The STA may continue to wait for *T_{wait}* in the listen state. A subsequent process is similar. Details are not described.

It may be learned from FIG. 5B that in the service scenario 2, a probability that the AP has, in *T_{wait},* downlink service data to be sent to the STA is very high. Therefore, the STA almost cannot enter the sleep state when there is no downlink packet in *T_{wait},* resulting in a large amount of power consumption in the listen state.

Embodiments of this application provide a sleep scheduling method, applied to a communication system 10. When a preset condition is met, a terminal device 100 (that is, a STA) in the communication system 10 may negotiate a sleep scheduling strategy with a network device 200 (that is, an AP), and the terminal device 100 may enter a sleep state and wake up based on the sleep scheduling strategy. In addition, the foregoing wait time *T_{wait}* is canceled. The sleep scheduling strategy may include at least one time slice (which may be collectively referred to as a sleep time) of the sleep state and at least one time slice (which may be collectively referred to as a listen time) of a listen state. For example, a proportion of the sleep time is equal to a proportion of the listen time, or a proportion of the sleep time is greater than a proportion of the listen time. Compared with a proportion 1 of the listen time in *T_{wait},* the proportion of the listen time in the sleep scheduling strategy in embodiments of this application is smaller (for example, less than or equal to 0.5), thereby effectively reducing power consumption in the listen state. In addition, a length of the time slice in the sleep scheduling strategy in embodiments of this application is determined based on a maximum delay that can be tolerated by a service currently running on the terminal device 100. Therefore, no high delay is introduced. In other words, in embodiments of this application, the power consumption in the listen state can be greatly optimized without affecting real-time service experience, so that a Wi-Fi system of the terminal device 100 is enabled to be in the sleep state as much as possible, thereby greatly reducing power consumption of the Wi-Fi system.

The following describes the sleep scheduling strategy in embodiments of this application by using an example.

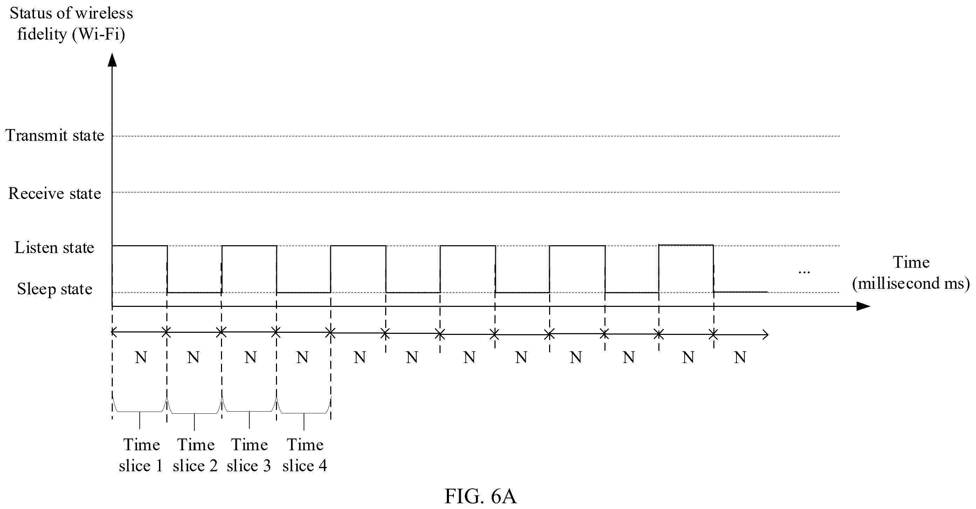

FIG. 6A is an example of a diagram of a sleep scheduling strategy.

In the sleep scheduling strategy shown in FIG. 6A, lengths of all time slices of a sleep state are equal (N is used as an example for illustration), lengths of all time slices of a listen state are equal (N is used as an example for illustration), and a length of one time slice of the sleep state and a length of one time slice of the listen state are equal (N is used as an example for illustration). Herein, N is a positive number, and N is a maximum delay that can be tolerated by a service running on a STA.

In the sleep scheduling strategy shown in FIG. 6A, the time slice of the listen state and the time slice of the sleep state alternate. A Wi-Fi system of the STA may periodically switch between the listen state and the sleep state, and switch once at an interval of N ms. For example, as shown in FIG. 6A, an end moment of a time slice 1 (N ms) of the listen state is a start moment of a time slice 2 (N ms) of the sleep state, an end moment of the time slice 2 of the sleep state is a start moment of a time slice 3 (N ms) of the listen state, an end moment of the time slice 3 of the listen state is a start moment of a time slice 4 (N ms) of the sleep state, and so on. Both the time slice 3 and the time slice 1 are time slices of the listen state. The time slice 3 may be understood as another time slice 1, and the time slice 1 may be understood as another time slice 3. Both the time slice 2 and the time slice 4 are time slices of the sleep state. The time slice 4 may be understood as another time slice 2, and the time slice 2 may be understood as another time slice 4. Descriptions of the time slice of the listen state and the time slice of the sleep state in subsequent embodiments of this application are similar.

In an implementation, in total duration in the sleep scheduling strategy shown in FIG. 6A, a quantity of time slices of the sleep state and a quantity of time slices of the listen state are equal. For example, FIG. 6A shows six time slices of the sleep state and six time slices of the listen state. Therefore, a proportion of a sleep time and a proportion of a listen time are equal, and both are 0.5. This is not limited thereto. In another implementation, a quantity of time slices of the sleep state and a quantity of time slices of the listen state may be unequal.

For example, a length of the total duration in the sleep scheduling strategy shown in FIG. 6A and a length of *T_{wait}* are equal.

It may be understood that compared with a proportion 1 of the listen time in *T_{wait},* the proportion of the listen time in the sleep scheduling strategy shown in FIG. 6A is approximately 0.5. Therefore, power consumption in the listen state can be reduced by approximately 50%. In addition, even if there is an uplink/downlink service in any time slice of the sleep state, because a length N of the any time slice of the sleep state is a maximum delay that can be tolerated by a service running on the STA, neither a communication process of the uplink/downlink service is performed in the sleep time, nor a delay exceeding an acceptable range is introduced. Therefore, a delay requirement of the service can be effectively ensured.

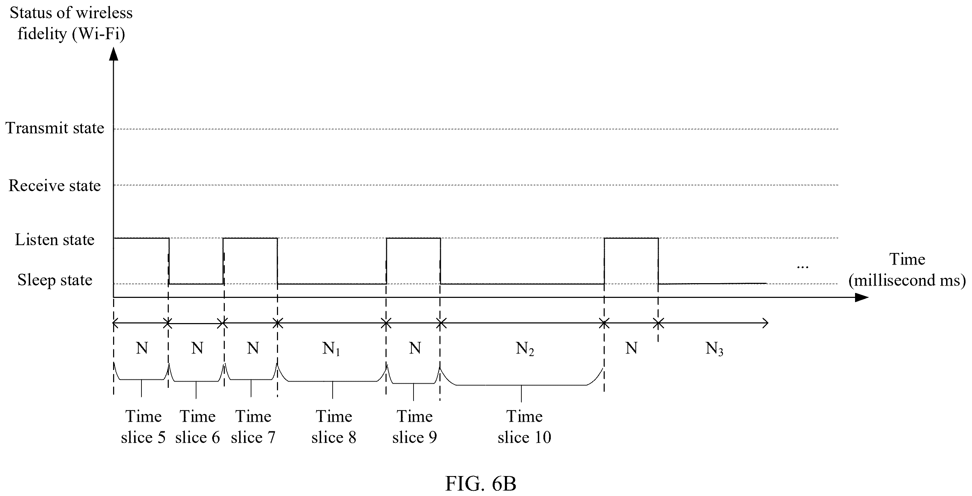

FIG. 6B is an example of a diagram of another sleep scheduling strategy.

In the sleep scheduling strategy shown in FIG. 6B, lengths of all time slices of a listen state are equal (N is used as an example for illustration), and lengths of at least two time slices of a sleep state may be unequal. For example, a length of a time slice 6 is N, a length of a time slice 8 is *N*₁, and *N*₁ *> N.* A length of at least one time slice of the sleep state and a length of one time slice of the listen state are equal. For example, lengths of both a time slice 5 of the listen state and the time slice 6 of the sleep state are N. A length of at least one time slice of the sleep state and a length of one time slice of the listen state are unequal. For example, the length of the time slice 5 of the listen state is N, and the length of the time slice 8 of the sleep state is *N*₁*.* A length of any time slice of the sleep state is greater than or equal to a length of one time slice of the listen state.

In the sleep scheduling strategy shown in FIG. 6B, the time slice of the listen state and the time slice of the sleep state alternate. A Wi-Fi system of a STA may periodically switch between the listen state and the sleep state, and switch from the listen state to the sleep state at an interval of N ms. For example, as shown in FIG. 6B, an end moment of the time slice 5 (N ms) of the listen state is a start moment of the time slice 6 (N ms) of the sleep state, an end moment of the time slice 6 of the sleep state is a start moment of a time slice 7 (N ms) of the listen state, an end moment of the time slice 7 of the listen state is a start moment of the time slice 8 (*N*₁ ms) of the sleep state, and so on.

In FIG. 6B, an example in which a length of the time slice of the sleep state may be gradually increased is used for illustration. For example, as shown in FIG. 6B, when there is no to-be-transmitted uplink data/downlink data in the 2^{nd} time slice 7 of the listen state, the length N of the 1^{st} time slice 6 of the sleep state is less than the length *N*₁ of the 2^{nd} time slice 8 of the sleep state; and when there is no to-be-transmitted uplink data/downlink data in the 3^{rd} time slice 9 of the listen state, the length *N*₁ of the 2^{nd} time slice 8 of the sleep state is less than a length *N*₂ of a 3^{rd} time slice 10 of the sleep state.

It may be understood that although the length of the time slice of the sleep state may be gradually increased, because total duration in the sleep scheduling strategy may be a preset fixed length, for example, equal to a length of *T_{wait},* if a last time slice in the sleep scheduling strategy is a time slice of the sleep state, even if there is no to-be-transmitted uplink data/downlink data in a penultimate time slice (namely, a time slice of the listen state), a length of the last time slice may not be a value obtained based on the foregoing pattern. For example, a length *N*₃ of a last time slice of the sleep state shown in FIG. 6B is less than the length *N*₂ of the previous time slice 10 of the sleep state.

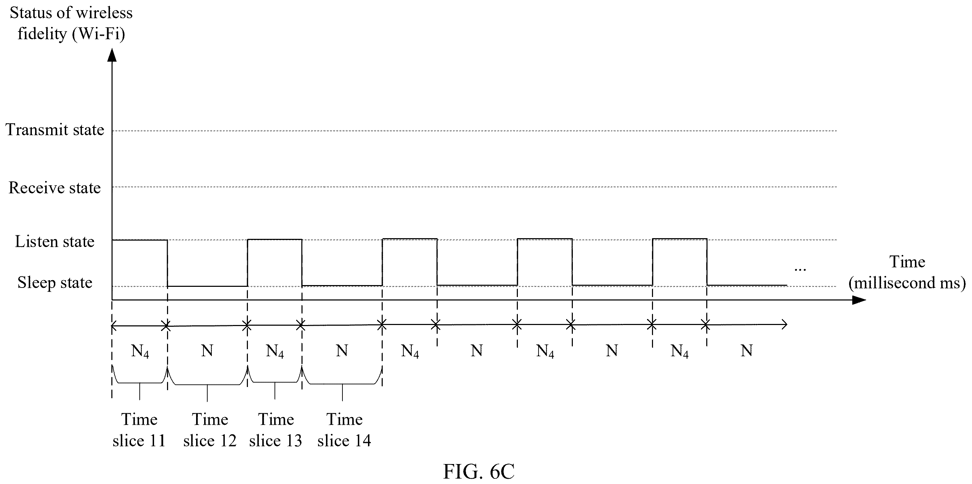

FIG. 6C is an example of a diagram of another sleep scheduling strategy.

In the sleep scheduling strategy shown in FIG. 6C, lengths of all time slices of a sleep state are equal (N is used as an example for illustration), lengths of all time slices of a listen state are equal (*N*₄ is used as an example for illustration), and a length of one time slice of the sleep state is greater than a length of one time slice of the listen state, that is, *N > N*₄*.*

In the sleep scheduling strategy shown in FIG. 6C, the time slice of the listen state and the time slice of the sleep state alternate. A Wi-Fi system of a STA may periodically switch between the listen state and the sleep state, switch from the sleep state to the listen state at an interval of N ms, and switch from the listen state to the sleep state at an interval of *N*₄ ms. For example, as shown in FIG. 6C, an end moment of a time slice 11 (*N*₄ ms) of the listen state is a start moment of a time slice 12 (N ms) of the sleep state, an end moment of the time slice 12 of the sleep state is a start moment of a time slice 13 (*N*₄ ms) of the listen state, an end moment of the time slice 13 of the listen state is a start moment of a time slice 14 (N ms) of the sleep state, and so on.

In an implementation, in total duration in the sleep scheduling strategies shown in FIG. 6B and FIG. 6C, a quantity of time slices of the sleep state and a quantity of time slices of the listen state are equal. For example, FIG. 6B shows four time slices of the sleep state and four time slices of the listen state, and a length of each time slice of the sleep state is greater than or equal to a length of the time slice of the listen state. For another example, FIG. 6C shows five time slices of the sleep state and five time slices of the listen state, and a length of each time slice of the sleep state is greater than a length of the time slice of the listen state. Therefore, a proportion of a listen time is less than a proportion of a sleep time, and the proportion of the listen time is approximately less than 0.5. This is not limited thereto. In another implementation, a quantity of time slices of the sleep state and a quantity of time slices of the listen state may be unequal.

For example, a length of the total duration in the sleep scheduling strategy shown in FIG. 6B/FIG. 6C and a length of *T_{wait}* are equal.

It may be understood that compared with a proportion 1 of the listen time in *T_{wait},* the proportion of the listen time in the sleep scheduling strategy shown in FIG. 6B/FIG. 6C is approximately less than 0.5. Therefore, power consumption in the listen state can be reduced by more than 50%. In addition, a length of the time slice of the sleep state is determined based on whether there is an uplink service/downlink service in each listen state, and the length of the time slice of the sleep state may be gradually increased. Therefore, a delay requirement of the service can be effectively ensured.

In FIG. 6A and FIG. 6C, an example in which lengths of all time slices of the listen state are equal, and lengths of all time slices of the sleep state are equal is used for illustration. In

FIG. 6B, an example in which lengths of all time slices of the listen state are equal, and lengths of at least two time slices of the sleep state are unequal is used for illustration. In specific implementation, lengths of at least two time slices of the listen state may be unequal, and lengths of all time slices of the sleep state may be equal, or lengths of at least two time slices of the listen state may be unequal, and lengths of at least two time slices of the sleep state may be unequal. This is not limited in embodiments of this application.

In FIG. 6A to FIG. 6C, an example in which a 1^{st} time slice is a time slice of the listen state is used for illustration. In specific implementation, the 1^{st} time slice may alternatively be a time slice of the sleep state. Types of the 1^{st} time slice and the last time slice are not limited in embodiments of this application.

The following describes, by using an example, a sleep/working process implemented by a Wi-Fi system based on the sleep scheduling method provided in embodiments of this application.

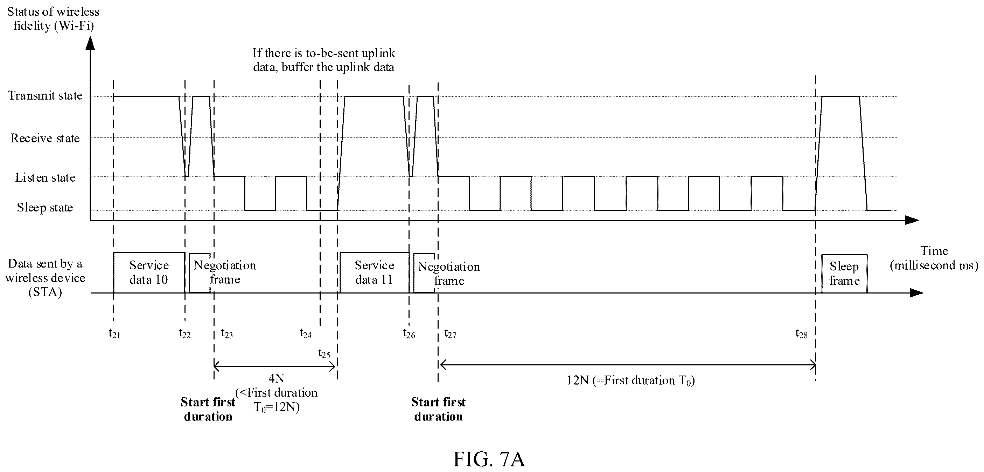

In the foregoing service scenario 1, after a STA completes data transmission with an AP (for example, after the STA completes sending of uplink service data to the AP), the STA may negotiate sleep scheduling information (including first duration) with the AP, and replace an original wait time *T_{wait}* with the first duration. For an example of a sleep/working process, refer to FIG. 7A to FIG. 7C.

FIG. 7A shows an example of another sleep/working process of a Wi-Fi system in a service scenario 1. In FIG. 7A, an example in which a terminal device 100 has an uplink service is used for illustration.

As shown in FIG. 7A, in a time from *t*₂₁ to *t*₂₂, the Wi-Fi system of a STA sends a last piece of service data 10 to an AP in a transmit state, and then in a time from *t*₂₂ to *t*₂₃, the STA sends a negotiation frame to the AP. The negotiation frame is used to negotiate sleep scheduling information 1 with the AP. The sleep scheduling information 1 may include first duration. The first duration may include at least one first time slice (namely, a time slice of a sleep state) and at least one second time slice (namely, a time slice of a listen state). In FIG. 7A, an example in which the first duration is set based on the sleep scheduling strategy shown in FIG. 6A, the first duration *T*₀ includes six first time slices and six second time slices, a length of each first time slice is N, and a length of each second time slice is N, that is, *T*₀ = 12 × N, is used for description. After the sleep scheduling information 1 is successfully negotiated, the STA may replace original *T_{wait}* with the first duration, and enter a sleep state and wake up based on the first time slice and the second time slice in the first duration. The AP may send downlink data based on the first time slice and the second time slice in the first duration.

As shown in FIG. 7A, the first duration is started from the time *t*₂₃. If a start moment of the first duration is a start moment of the time slice of the listen state, the STA may enter the listen state at the time *t*₂₃, enter the sleep state after being in the listen state for N ms (that is, a 1^{st} time slice, namely, a time slice of the listen state), that is, enter the sleep state at an end moment of the 1^{st} time slice (that is, a start moment of a 2^{nd} time slice), then enter the listen state after being in the sleep state for N ms (that is, the 2^{nd} time slice, namely, a time slice of the sleep state), that is, enter the listen state at an end moment of the 2^{nd} time slice (that is, a start moment of a 3^{rd} time slice, where the 3^{rd} time slice is a time slice of the listen state), and so on. It may be understood that the STA switches the listen state/sleep state once at an interval of N ms in the first duration. If in a 4^{th} time slice (namely, a time slice of the sleep state), for example, a time *t*₂₄, the STA detects to-be-sent uplink data (namely, service data 11) in the sleep state, the uplink data is buffered (for example, buffered in a preset transmit queue). When a next time slice of the listen state arrives, that is, at a time *t*₂₅ (that is, an end moment of the 4^{th} time slice) (an interval between *t*₂₅ and *t*₂₃ is 4N ms), the STA may enter the listen state from the sleep state, and enter the transmit state from the listen state when a Wi-Fi channel is idle (it is assumed that the Wi-Fi channel is currently in the idle state). In a time from *t*₂₅ to *t*₂₆, the STA may send the service data 11 to the AP in the transmit state. It may be understood that the first duration is ended in advance at the end moment (that is, the time *t*₂₅) of the 4^{th} time slice.

As shown in FIG. 7A, after the STA completes sending of the service data 11 to the AP, the STA may send a negotiation frame to the AP in the transmit state in a time from *t*₂₆ to *t*₂₇. The negotiation frame is used to negotiate sleep scheduling information 1 with the AP. New first duration may be started from the time *t*₂₇. The STA may enter the listen state, enter the sleep state after being in the listen state for N ms (that is, a 1^{st} time slice, namely, a time slice of the listen state), enter the listen state after being in the sleep state for N ms (that is, a 2^{nd} time slice, namely, a time slice of the sleep state), and so on, until the current first duration *T*₀ = 12 × N is ended (an end moment is *t*₂₈). Because there is no uplink service or downlink service in the first duration (that is, a time from *t*₂₇ to *t*₂₈), when the first duration is ended, that is, at the time *t*₂₈, the STA may enter the transmit state and send a sleep frame to the AP, to notify the AP that the STA is to enter the sleep state, and enter the sleep state after sending the sleep frame. Optionally, after entering the sleep state, the STA may wake up and listen for a beacon frame at an interval of TBTTs whose quantity is a listen interval based on a PSM sleep mechanism, for example, the process after the time *t*₄ shown in FIG. 5A.

In FIG. 7A, if the STA detects, in a time slice of the sleep state in the first duration, that there is to-be-sent uplink data, the STA maintains the sleep state, and buffers the uplink data. After a next time slice (namely, a time slice of the listen state) of the time slice of the sleep state arrives, the STA enters the transmit state, and sends the uplink data to the AP. It may be understood that the first duration is ended in advance after the time slice of the sleep state in which it is detected that there is to-be-sent uplink data is ended. This is not limited thereto. In some other examples, when detecting, in a time slice of the sleep state in the first duration, that there is to-be-sent uplink data, the STA may not buffer the uplink data, and enter the transmit state from the sleep state to send the uplink data to the AP. It may be understood that the first duration is ended in advance in the time slice of the sleep state in which it is detected that there is to-be-sent uplink data, for example, at the time *t*₂₄ shown in FIG. 7A, and there is no need to end the first duration after the time slice of the sleep state is ended. In some other examples, the STA may detect, in a time slice of the listen state in the first duration, that there is to-be-sent uplink data. In this case, the STA may not buffer the uplink data, and switch to the transmit state from the listen state to send the uplink data to the AP. It may be understood that the first duration is ended in advance in the time slice of the listen state in which it is detected that there is to-be-sent uplink data.

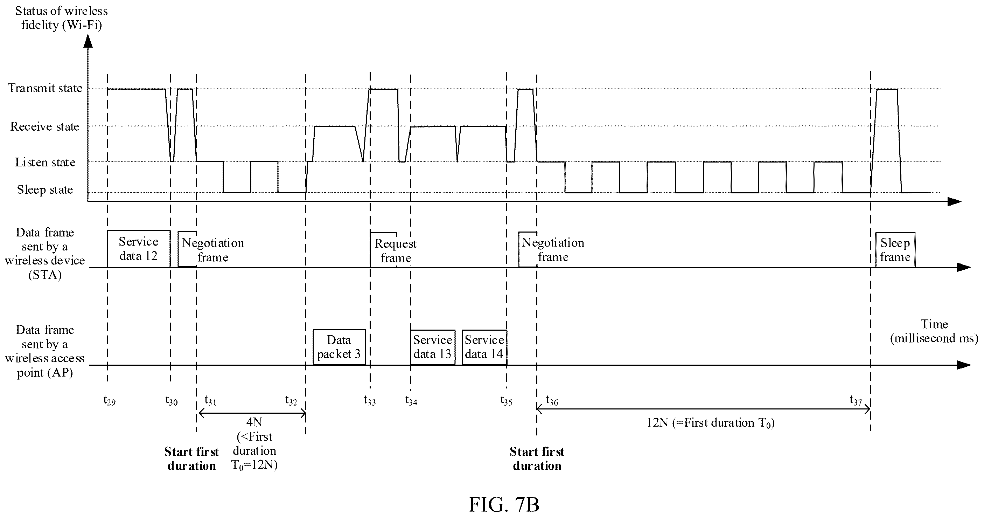

FIG. 7B shows an example of another sleep/working process of a Wi-Fi system in a service scenario 1. In FIG. 7B, an example in which a terminal device 100 has a downlink service is used for illustration.

As shown in FIG. 7B, in a time from *t*₂₉ to *t*₃₀, the Wi-Fi system of a STA sends a last piece of service data 12 to an AP in a transmit state, and then in a time from *t*₃₀ to *t*₃₁, the STA sends a negotiation frame to the AP. The negotiation frame is used to negotiate sleep scheduling information 1 with the AP. For descriptions of the sleep scheduling information 1, refer to the descriptions of the sleep scheduling information 1 in FIG. 7A.

As shown in FIG. 7B, first duration is started from the time *t*₃₁, and the STA may switch a listen state/sleep state once at an interval of N ms in the first duration. If in a 4^{th} time slice (namely, a time slice of the sleep state), the STA is in the sleep state, and the AP has to-be-sent downlink data, the downlink data is buffered. After a next time slice of the listen state arrives (that is, after the current time slice of the sleep state is ended), a data packet 3 is sent, to notify the STA that there is to-be-sent downlink data. At an end moment *t*₃₂ of the 4^{th} time slice (an interval between *t*₃₂ and *t*₃₁ is 4N ms), the STA may enter the listen state from the sleep state. When the STA detects, in the listen state, that a downlink data packet is about to arrive, the STA may enter a receive state from the listen state, and receive, in the receive state, the data packet 3 sent by the AP. The STA learns, based on the data packet 3, that the AP has service data to be sent to the STA. Therefore, the STA enters the listen state, and enters the transmit state from the listen state when a Wi-Fi channel is idle (it is assumed that the Wi-Fi channel is currently in the idle state). When entering the transmit state (that is, at a time *t*₃₃), the STA may send a request frame to the AP, to request downlink data from the AP. After sending the request frame, the STA may enter the listen state, and enter the receive state when the downlink data is about to arrive. It is assumed that the downlink data to be sent by the AP to the STA includes service data 13 and service data 14. At a time *t*₃₄, the STA enters the receive state, and from the time *t*₃₄ to a time *t*₃₅, the STA sequentially receives the service data 13 and the service data 14 that are sent by the AP. It may be understood that the first duration is ended in advance at the end moment (that is, the time *t*₃₂) of the 4^{th} time slice.

As shown in FIG. 7B, after the STA receives the service data 13 and the service data 14 that are sent by the AP, that is, after the time *t*₃₅, the STA may enter the listen state, and then switch to the transmit state to send a negotiation frame to the AP. The negotiation frame is used to negotiate sleep scheduling information 1 with the AP. New first duration may be started from a time *t*₃₆, and the STA may switch between the sleep state and the listen state at an interval of N ms in the first duration, until the current first duration *T*₀ = 12 × *N* is ended (an end moment is a time *t*₃₇). Because there is no uplink service or downlink service in the first duration (that is, a time from *t*₃₆ to *t*₃₇), when the first duration is ended, that is, at the time *t*₃₇, the STA may enter the transmit state and send a sleep frame to the AP, to notify the AP that the STA is to enter the sleep state, and enter the sleep state after sending the sleep frame.

The data packet 3 is used to notify the STA that the AP currently has downlink data to be sent to the STA. In some examples, when the STA and the AP negotiate by using a target wake time (target wake time, TWT) mechanism or a private negotiation mechanism (that is, negotiation is performed by using a customized action (Action) frame), the data packet 3 may be a trigger (Trigger) frame. This is not limited thereto. In some other examples, when the STA and the AP negotiate by using a PSM (for example, use a null data frame of the PSM), the data packet 3 may be a state-1 beacon frame.

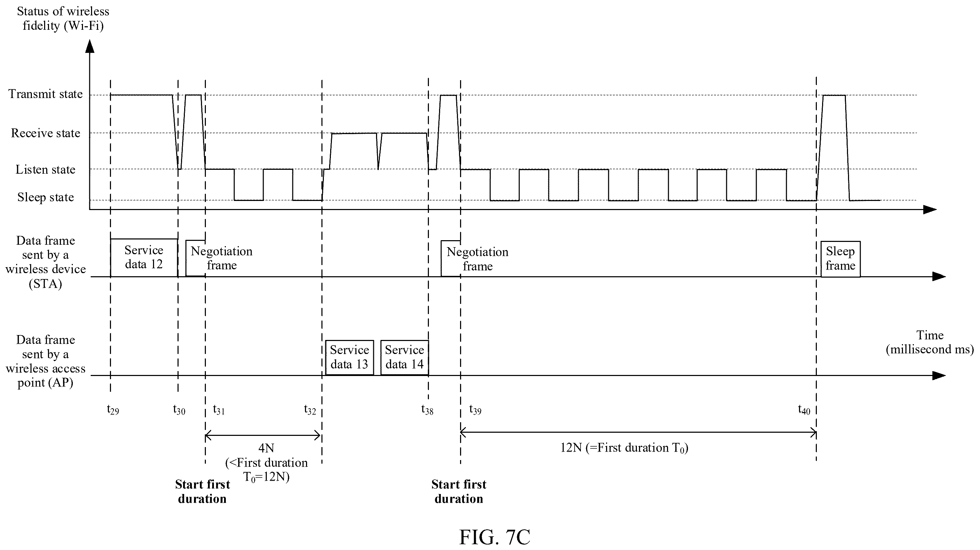

This is not limited to the example shown in FIG. 7B. In some other examples, the AP may not send the data packet 3, but directly send downlink service data, for example, in a case in which the STA and the AP negotiate by using the TWT or the private negotiation mechanism. For a specific example, refer to FIG. 7C.

FIG. 7C shows an example of another sleep/working process of a Wi-Fi system in a service scenario 1. FIG. 7C is similar to FIG. 7B, and a difference lies in that after the end moment *t*₃₂ of the 4^{th} time slice, the AP may not send the data packet 3, but directly send the service data 13 and the service data 14 to the STA. At the time *t*₃₂, the STA may enter the listen state from the sleep state, and then enter the receive state when the downlink data is about to arrive. The STA may sequentially receive the service data 13 and the service data 14 in the receive state. Then, at a time *t*₃₈, the STA may enter the listen state, and then switch to the transmit state from the listen state and send a negotiation frame to the AP. The negotiation frame is used to negotiate sleep scheduling information 1 with the AP. Subsequently, new first duration may be started from a time *t*₃₉, and the STA may switch between the sleep state and the listen state at an interval of N ms in the first duration, until the current first duration *T*₀ = 12 × N is ended (an end moment is a time *t*₄₀). Because there is no uplink service or downlink service in the first duration (that is, a time from *t*₃₉ to *t*₄₀), when the first duration is ended (that is, at the time *t*₄₀), the STA may enter the transmit state, send a sleep frame to the AP, and enter the sleep state.

In FIG. 7B and FIG. 7C, if the AP detects, in a time slice of the sleep state in the first duration, that there is to-be-sent downlink data, the AP buffers the downlink data, and sends the downlink data after a next time slice (namely, a time slice of the listen state) of the time slice of the sleep state arrives. It may be understood that the first duration is ended in advance after the time slice of the sleep state in which it is detected that there is to-be-sent downlink data is ended. This is not limited thereto. In some other examples, the AP may detect, in a time slice of the listen state in the first duration, that there is to-be-sent downlink data. In this case, the AP may not buffer the downlink data, but directly send the data packet 3 and the downlink data (similar to FIG. 7B), or directly send the downlink data (similar to FIG. 7C). It may be understood that the first duration is ended in advance in the time slice of the listen state in which it is detected that there is to-be-sent downlink data.

In FIG. 7A to FIG. 7C, an example in which the first duration is set based on the sleep scheduling strategy shown in FIG. 6A is used for description. In specific implementation, the first duration may alternatively be set based on FIG. 6B, FIG. 6C, or another sleep scheduling strategy. A specific manner of setting the first time slice and the second time slice in the first duration is not limited in embodiments of this application, but the first time slice and the second time slice always alternate in the first duration.

In an implementation, in the foregoing service scenario 1, when a maximum delay N that can be tolerated by a service running on the STA is less than the first duration, after the STA completes data transmission with the AP, the STA may negotiate the first duration with the AP. However, when the maximum delay N that can be tolerated by the service running on the STA is greater than or equal to the first duration, after the STA completes data transmission with the AP, the STA may directly send a sleep frame and enter the sleep state, that is, a wait time is directly canceled. In this case, although the STA can receive a beacon frame only after a next TBTT after entering the sleep state, because N is large, for example, the first duration is 100 ms, and N is greater than 100 ms, real-time experience of the current service is not affected. This completely avoids a power consumption waste in the listen state in the wait time.

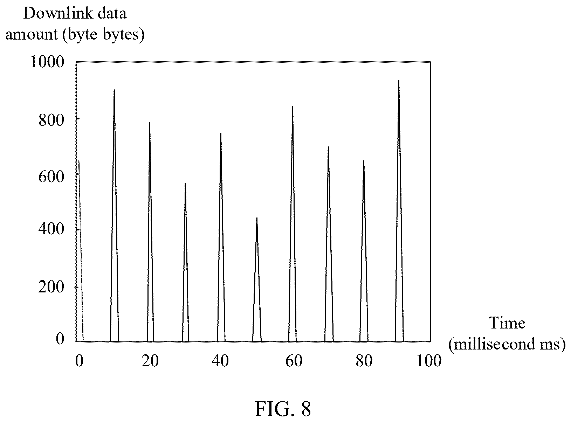

It may be learned from FIG. 4B and FIG. 5B that in the traffic model in the service scenario 2, there are continuously packets and a balanced data amount. Therefore, the STA almost cannot enter the sleep state when there is no downlink packet in *T_{wait}.* An embodiment of this application provides a traffic shaping mode, and the continuous traffic model in the service scenario 2 may be integrated into a pulsed traffic model. For an example of an integrated traffic model, refer to FIG. 8.

FIG. 8 is an example of a diagram of a pulsed traffic model in a service scenario 2. A pattern of downlink traffic of the traffic model is that there are a large quantity of packets in a short concentrated period of time, then there are no packets in a period of time, then there are a large quantity of packets in a short concentrated period of time, then there are no packets in a period of time, and so on. That is, the traffic model has downlink traffic at an interval of a period of time and has no downlink traffic in another time. For example, in FIG. 8, there are approximately 650 bytes of downlink traffic in a short period of time after 0 ms, there are more than 900 bytes of downlink traffic in approximately 10 ms, there are approximately 800 bytes of downlink traffic in approximately 20 ms, and so on. This may be understood as that there is high downlink traffic at an interval of 10 ms, and there is no downlink traffic in another time.

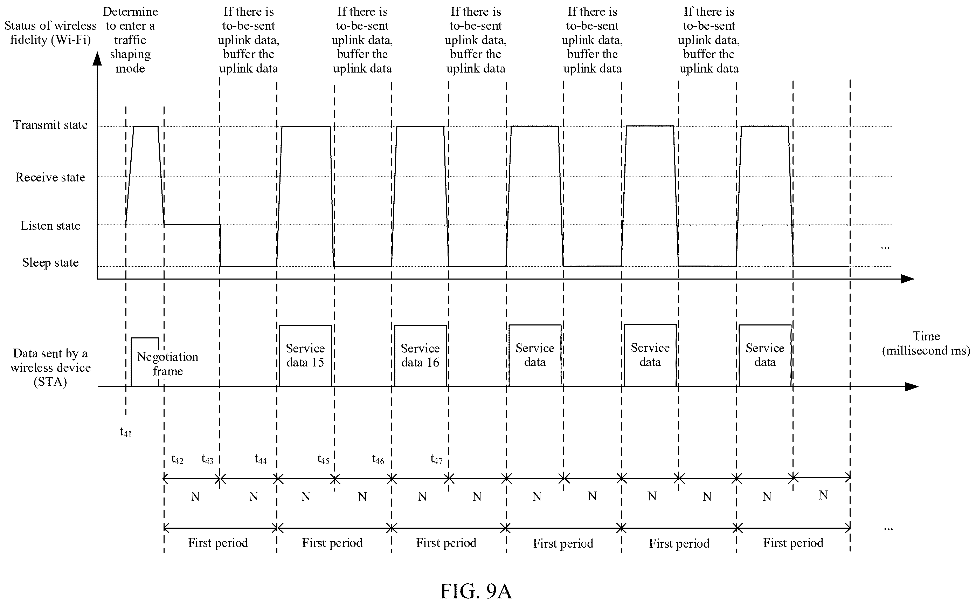

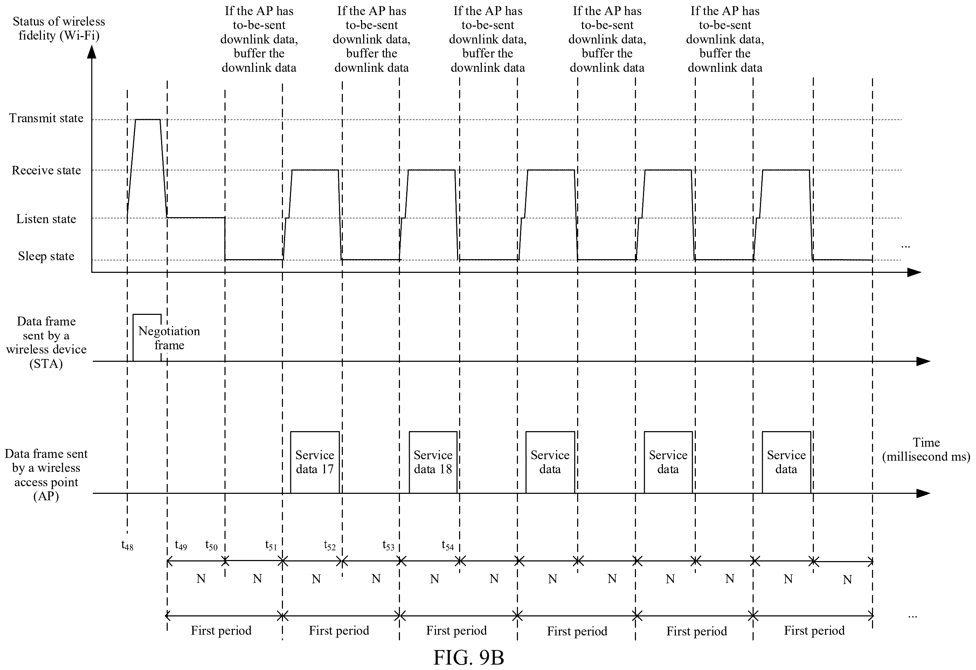

In the foregoing service scenario 2, if a current channel capacity is far greater than bandwidth of a current service (in this case, a large amount of data may be transmitted in a short time), a STA may determine to enter the traffic shaping mode. Otherwise, the traffic shaping mode is not entered. When determining to enter the traffic shaping mode, the STA may negotiate sleep scheduling information (including a first period) with an AP. In the traffic shaping mode, the STA may periodically switch between a listen state and a sleep state based on the first period, and both the STA and the AP may buffer a to-be-sent data packet and periodically send the buffered data packet based on the first period. For an example of a sleep/working process, refer to FIG. 9A and FIG. 9B.

FIG. 9A shows an example of another sleep/working process of a Wi-Fi system in a service scenario 2. In FIG. 9A, an example in which a terminal device 100 has an uplink service is used for illustration.

As shown in FIG. 9A, at a time *t*₄₁, a STA determines to enter a traffic shaping mode. Therefore, in a time from *t*₄₁ to *t*₄₂, the Wi-Fi system of the STA sends a negotiation frame to an AP in a transmit state. The negotiation frame is used to negotiate sleep scheduling information 2 with the AP. The sleep scheduling information 2 may include a first period. One first period may include one first time slice (namely, a time slice of a sleep state) and one second time slice (namely, a time slice of a listen state). In FIG. 9A, an example in which the first period is set based on the sleep scheduling strategy shown in FIG. 6A, and lengths of both the first time slice and the second time slice in the first period are N, that is, the first period is 2N, is used for description. After the sleep scheduling information 2 is successfully negotiated, a plurality of first periods may proceed. The STA may enter the sleep state and wake up based on the first time slice and the second time slice in the first period. In addition, in the second time slice in the first period, the STA may send uplink data, and/or the AP may send downlink data.

As shown in FIG. 9A, a plurality of first periods start to proceed from the time *t*₄₂. If a start moment of the first period is a start moment of the time slice of the listen state, the STA may enter the listen state at a start moment *t*₄₂ of a 1^{st} first period, enter the sleep state after being in the listen state for N ms (that is, a time slice of the listen state), that is, enter the sleep state at an end moment *t*₄₃ of the time slice of the listen state (that is, a start moment of a time slice of the sleep state), and then be in the sleep state for N ms (that is, the time slice of the sleep state). An end moment *t*₄₄ of the time slice of the sleep state is an end moment of the 1^{st} first period. Subsequently, a new first period may proceed. For example, the time *t*₄₄ to a time *t*₄₆ is a 2^{nd} first period. Therefore, the STA may switch the listen state/sleep state once at an interval of N ms.

As shown in FIG. 9A, the STA may send uplink data in the time slice of the listen state in the first period. It is assumed that the STA does not detect uplink data or downlink data in the listen state in a time slice of the listen state in the 1^{st} first period, that is, in a time from *t*₄₂ to *t*₄₃. It is assumed that if the STA detects to-be-sent uplink data in the sleep state in a time slice of the sleep state in the 1^{st} first period, that is, in a time from *t*₄₃ to *t*₄₄, the uplink data is buffered (for example, buffered in a preset transmit queue). When a time slice of the listen state in the 2^{nd} first period arrives (that is, when the time slice of the sleep state in the 1^{st} first period is ended), that is, at the time *t*₄₄, the STA may enter the listen state from the sleep state, and enter the transmit state from the listen state when a Wi-Fi channel is idle (it is assumed that the Wi-Fi channel is currently in the idle state). In addition, in the current time slice of the listen state, that is, from the time *t*₄₄ to a time *t*₄₅, the STA may send the uplink data (namely, service data 15) buffered in the transmit queue to the AP in the transmit state. Subsequent descriptions are similar. When detecting to-be-sent uplink data in a time slice of the sleep state, the STA may buffer the uplink data in the preset transmit queue, and switch to the transmit state when a next time slice of the listen state of the time slice of the sleep state arrives, to send the data in the transmit queue to the AP in the transmit state. For example, in a time slice (that is, a time from *t*₄₅ to *t*₄₆) of the sleep state in the 2^{nd} first period, if the STA has to-be-sent uplink data, the uplink data is buffered, the STA sends the buffered data to the AP in a time slice (that is, a time from *t*₄₆ to *t*₄₇) of the listen state in a 3^{rd} first period, and so on. No examples are provided one by one.

In FIG. 9A, if the STA detects, in a time slice of the sleep state in the first period, that there is to-be-sent uplink data, the STA maintains the sleep state, and buffers the uplink data. After a next time slice of the listen state of the time slice of the sleep state arrives, the STA enters the transmit state, and sends the uplink data to the AP. This is not limited thereto. In some other examples, the STA may detect, in a time slice of the listen state in the first period, that there is to-be-sent uplink data. In this case, the STA may send the currently detected uplink data in the transmit state before the current time slice of the listen state is ended.

FIG. 9B shows an example of another sleep/working process of a Wi-Fi system in a service scenario 2. In FIG. 9B, an example in which a terminal device 100 has a downlink service is used for illustration.

As shown in FIG. 9B, at a time *t*₄₈, a STA determines to enter a traffic shaping mode. Therefore, in a time from *t*₄₈ to *t*₄₉, the Wi-Fi system of the STA sends a negotiation frame to an AP in a transmit state. The negotiation frame is used to negotiate sleep scheduling information 2 with the AP. For descriptions of the sleep scheduling information 2, refer to the descriptions of the sleep scheduling information 2 in FIG. 9A.

As shown in FIG. 9B, a plurality of first periods start to proceed from the time *t*₄₉. The time *t*₄₉ to a time *t*₅₁ is a 1^{st} first period, the time *t*₅₁ to a time *t*₅₃ is a 2^{nd} first period, and so on. For descriptions of switching a listen state/sleep state by the STA in each first period, refer to the descriptions of the 1^{st} first period (the time from *t*₄₂ to *t*₄₄) in FIG. 9A. Details are not described.

As shown in FIG. 9B, the AP may send downlink data in a time slice of the listen state in the first period. It is assumed that the STA does not detect uplink data or downlink data in the listen state in a time slice of the listen state in the 1^{st} first period, that is, in a time from *t*₄₉ to *t*₅₀. If in a time slice of the sleep state in the 1^{st} first period, that is, in a time from *t*₅₀ to *t*₅₁, the STA is in the sleep state, and the AP has to-be-sent downlink data, the downlink data is buffered. After a time slice of the listen state in the 2^{nd} first period arrives (that is, after the time slice of the sleep state in the 1^{st} first period is ended), the downlink data is sent. At an end moment *t*₅₁ of the time slice of the sleep state in the 1^{st} first period, the STA may enter the listen state from the sleep state. When the STA detects, in the listen state, that a downlink data packet is about to arrive, the STA may enter a receive state from the listen state. In addition, in a current time slice of the listen state, that is, from the time *t*₅₁ to a time *t*₅₂, the STA may receive, in the receive state, downlink data (namely, service data 17) sent by the AP. Subsequent descriptions are similar. When detecting to-be-sent downlink data in a time slice of the sleep state, the AP may buffer the downlink data, and send the downlink data to the STA in a next time slice of the listen state of the time slice of the sleep state. For example, in a time slice (that is, a time from *t*₅₂ to *t*₅₃) of the sleep state in the 2^{nd} first period, if the STA is in the sleep state, and the AP has to-be-sent downlink data, the downlink data is buffered, the STA receives, in the receive state in a time slice (that is, a time from *t*₅₃ to *t*₅₄) of the listen state in a 3^{rd} first period, downlink data (namely, service data 18) sent by the AP, and so on. No examples are provided one by one.

In FIG. 9B, an example in which the AP does not send a data packet 3, but directly sends downlink service data is used for illustration. In some other examples, the AP may first send the data packet 3, to notify the STA that the AP currently has downlink data to be sent to the STA, and the AP sends the downlink service data after receiving a request frame sent by the STA. For a specific example, refer to the descriptions of the time from *t*₃₂ to *t*₃₅ in FIG. 7B.

For example, when N=10 ms, the traffic model of the sleep/working process shown in FIG. 9A/FIG. 9B may be the traffic model shown in FIG. 8.

In FIG. 9B, if the AP detects, in a time slice of the sleep state in the first period, that there is to-be-sent downlink data, the AP buffers the downlink data, and sends the downlink data after a next time slice of the listen state of the time slice of the sleep state arrives. This is not limited thereto. In some other examples, the AP may detect, in a time slice of the listen state in the first period, that there is to-be-sent downlink data. In this case, the AP may not buffer the downlink data, but directly send the data packet 3 and the downlink data (similar to FIG. 7B) before the current time slice of the listen state is ended, or directly send the downlink data (similar to FIG. 7C).

In an implementation, in the traffic shaping mode, if a specific condition is met (for example, a data amount in the preset transmit queue exceeds a preset queue threshold), the STA may exit the traffic shaping mode, and in this case, no longer proceed with the first period, for example, in this case, may work based on the foregoing PSM sleep mechanism.

In FIG. 9A and FIG. 9B, an example in which the first period is set based on the sleep scheduling strategy shown in FIG. 6A is used for description. In specific implementation, the first period may alternatively be set based on another sleep scheduling strategy. In some examples, the first period is set based on the sleep scheduling strategy shown in FIG. 6B. In this case, the 1^{st} first period includes a time slice 5 and a time slice 6, the 2^{nd} first period includes a time slice 7 and a time slice 8, the 3^{rd} first period includes a time slice 9 and a time slice 10, and so on. In some other examples, the first period is set based on the sleep scheduling strategy shown in FIG. 6C. In this case, the 1^{st} first period includes a time slice 11 and a time slice 12, the 2^{nd} first period includes a time slice 13 and a time slice 14, and so on. A specific manner of setting the first time slice and the second time slice in the first period is not limited in embodiments of this application.

In FIG. 9A and FIG. 9B, an example in which uplink data transmission or downlink data transmission is performed in one time slice of the listen state is used for description. In specific implementation, uplink data transmission and downlink data transmission may be performed in one time slice of the listen state. For example, uplink data transmission is performed before downlink data transmission. Transmission processes in different service scenarios and different times may be different. A specific transmission process in the time slice of the listen state is not limited in embodiments of this application.

It may be understood that each time before uplink data is sent, the STA first contends for a channel, and sends the uplink data only after the contention succeeds. Similarly, each time before downlink data is sent, the AP first contends for a channel, and sends the downlink data only after the contention succeeds. In some examples, if the AP needs to send downlink data when the STA needs to send uplink data, the STA and the AP may contend for a channel, and only a device whose contention succeeds can send data.

It may be understood that the STA may send a negotiation frame to the AP after the STA sends the uplink service data to the AP, or the STA may send a negotiation frame to the AP after the STA receives the downlink service data sent by the AP. This is not limited in embodiments of this application.

The following describes a schematic flowchart of the sleep scheduling method provided in embodiments of this application. The method may be applied to the terminal device 100 shown in FIG. 1A. The method may be applied to the terminal device 100 shown in FIG. 1B. The method may be applied to the terminal device 100 shown in FIG. 2. The method may be applied to the terminal device 100 shown in FIG. 3.

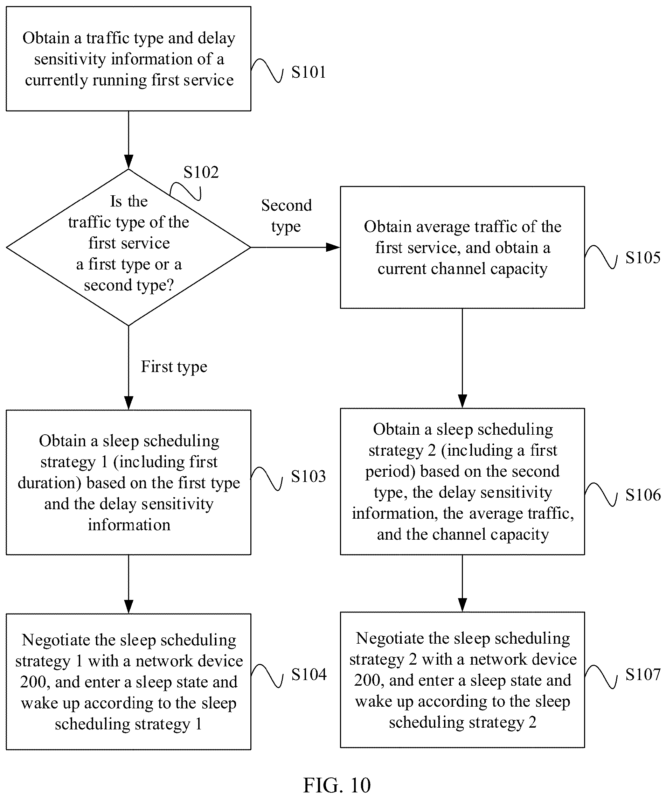

FIG. 10 is a schematic flowchart of a sleep scheduling method according to an embodiment of this application. The method may include but is not limited to the following steps.

S101: A terminal device 100 obtains a traffic type and delay sensitivity information of a currently running first service.

In an implementation, the terminal device 100 may identify the traffic type of the currently running first service. Traffic models of first services of different traffic types are different. The traffic type of the first service may be but is not limited to a first type or a second type. For an example of a traffic model of the first service of the first type, refer to the pulsed traffic model in the service scenario 1 shown in FIG. 4A. For an example of a traffic model of the first service of the second type, refer to the continuous traffic model in the service scenario 2 shown in FIG. 4B.

In an implementation, the delay sensitivity information may be a maximum delay that can be tolerated by the first service, that is, N ms. The terminal device 100 may identify whether the currently running first service includes a delay-sensitive service. When a delay-sensitive service is included, a maximum delay (that is, the delay sensitivity information) that can be tolerated by the delay-sensitive service may be obtained. When no delay-sensitive service is included, a preset delay may be determined as the maximum delay (that is, the delay sensitivity information) that can be tolerated by the first service.

S102: The terminal device 100 determines that the traffic type of the first service is the first type or the second type.

In the procedure shown in FIG. 10, for first services of different traffic types, the terminal device 100 may use different sleep scheduling strategies. When the traffic type of the first service obtained in S101 is the first type, the terminal device 100 may perform S103 and S104. When the traffic type of the first service obtained in S101 is the second type, the terminal device 100 may perform S105 to S107.

S103: The terminal device 100 obtains a sleep scheduling strategy 1 (including first duration) based on the first type and the delay sensitivity information.

In an implementation, the terminal device 100 may determine, based on the first type and the delay sensitivity information, that it is currently in a service scenario 1 (traffic exhibits a pulsed pattern similar to that shown in FIG. 4A) and the maximum delay N that can be tolerated by the currently running first service. When it is currently in the service scenario 1, the terminal device 100 may determine a length of a first time slice and a length of a second time slice based on N, and determine the first duration (including at least one first time slice and at least one second time slice). The first time slice is a time slice in which the terminal device 100 is in a sleep state (namely, the foregoing time slice of the sleep state), and the second time slice is a time slice in which the terminal device 100 is in a listen state (namely, the foregoing time slice of the listen state). For an example of the first duration in the sleep scheduling strategy 1, refer to the total duration shown in FIG. 6A to FIG. 6C.

In an implementation, the sleep scheduling strategy 1 may include: The terminal device 100 replaces an original wait time *T_{wait}* with the first duration. For example, a length of the first duration and a length of the wait time *T_{wait}* are equal.

In an implementation, the sleep scheduling strategy 1 may include: After the terminal device 100 completes data transmission with a network device 200, the terminal device 100 may enter the sleep state and wake up based on the first time slice and the second time slice in the first duration, and if there is no uplink service or downlink service in the first duration, the terminal device 100 may enter the sleep state.

S104: The terminal device 100 negotiates the sleep scheduling strategy 1 with the network device 200, and enters the sleep state and wakes up based on the sleep scheduling strategy 1.

In an implementation, after the terminal device 100 completes current data transmission with the network device 200, for example, after the terminal device 100 sends current uplink data to the network device 200, or after the terminal device 100 receives downlink data currently sent by the network device 200, the terminal device 100 may actively negotiate the sleep scheduling strategy 1 with the network device 200.

In an implementation, the terminal device 100 may first send a negotiation frame to the network device 200, to negotiate the sleep scheduling strategy 1 with the network device 200. After the negotiation succeeds (for example, after the negotiation frame is successfully sent), the terminal device 100 starts the first duration, and enters the sleep state and wakes up based on the first time slice and the second time slice in the first duration, that is, sends the negotiation frame before a start moment of the first duration. The negotiation frame may include at least one of the following: information about the first duration (for example, the length), information about the first time slice, or information about the second time slice. The information about the first time slice/second time slice may include but is not limited to a length, whether lengths of a plurality of time slices are equal in a case of the plurality of time slices, an association relationship between lengths of a plurality of time slices in a case of the plurality of time slices, a proportion in the first duration, a quantity in the first duration, or the like. For example, the negotiation frame includes the length of the first time slice, the length of the second time slice, the quantity of first time slices in the first duration, and the quantity of second time slices in the first duration. For another example, the negotiation frame includes the length of the first duration, and the proportion of the first time slice or the second time slice in the first duration. For a specific implementation example, refer to the following implementation 2 and implementation 3 of negotiating the sleep scheduling strategy 1.

In another implementation, the terminal device 100 may alternatively negotiate the sleep scheduling strategy 1 with the network device 200 in the first duration. For a specific implementation example, refer to the following implementation 1 of negotiating the sleep scheduling strategy 1.

In this embodiment of this application, an implementation in which the terminal device 100 and the network device 200 negotiate the sleep scheduling strategy 1 may include but is not limited to the following three manners:
Manner 1: The sleep scheduling strategy 1 is negotiated based on a PSM. In the first duration, the terminal device 100 may send a sleep frame to the network device 200 each time before entering the sleep state. The network device 200 may determine, based on the sleep frame, that the terminal device 100 is about to enter/enters the sleep state. In addition, the terminal device 100 may send a wakeup frame to the network device 200 each time after waking up (for example, when entering the listen state). The network device 200 may determine, based on the wakeup frame, that the terminal device 100 is currently woken up (that is, in a working state). In an implementation, when a 1^{st} time slice in the first duration is a time slice of the listen state, the negotiation frame may be a wakeup frame; or when a 1^{st} time slice in the first duration is a time slice of the sleep state, the negotiation frame may be a sleep frame. In an implementation, the sleep scheduling strategy may be negotiated based on a null data frame of the PSM. The null data frame is a short frame, and it takes approximately dozens of microseconds to transmit data. For example, the sleep frame may be obtained by setting a power management bit in the null data frame to 1, and the wakeup frame may be obtained by setting the power management bit in the null data frame to 0. It may be understood that currently, basically all devices that support Wi-Fi support a PSM protocol. Therefore, negotiating the sleep scheduling strategy based on the PSM has good universality.
Manner 2: The sleep scheduling strategy 1 is negotiated based on a TWT. The TWT is a mechanism for negotiating sleep and wakeup by a STA and an AP. The STA may negotiate a TWT schedule (TWT Schedule) with the AP by using a TWT setup frame. The TWT schedule may divide a time axis into a time slice of a doze (Doze) state and a time slice of a TWT service period (service period, SP) state that alternate. One time slice of the doze state and one time slice of the TWT SP state that are continuous may be referred to as one TWT period. The negotiation frame may be the TWT setup frame, the doze state may correspond to the sleep state in this embodiment of this application, and the TWT SP state may correspond to the working state (for example, the listen state) in this embodiment of this application. In an implementation, the TWT schedule may include but is not limited to at least one of the following information: duration of one TWT period, duration of being in the TWT SP state in one TWT period, a proportion of the TWT SP state in one TWT period, a start point and/or an end point of an event that occurs, a quantity of TWT periods, or a management frame (for example, a management frame for interaction in the TWT SP state). The management frame is, for example, the foregoing data packet 3 (used to notify the STA that the AP currently has downlink data to be sent to the STA) (which may be a trigger frame). It may be understood that negotiating the sleep scheduling strategy based on the TWT requires both the terminal device 100 and the network device 200 to support a TWT protocol (an optional feature in Wi-Fi 6).
Manner 3: The sleep scheduling strategy 1 is negotiated based on a private negotiation mechanism. The terminal device 100 and the network device 200 may customize an action frame, and negotiate the sleep scheduling strategy 1 by transmitting the action frame. The negotiation frame is the customized action frame.

In an implementation, the terminal device 100 may configure a sleep parameter based on the obtained sleep scheduling strategy 1, so that when the terminal device 100 subsequently enters the sleep state and wakes up in the first duration based on the configured sleep parameter, there can be correspondence with the first time slice and the second time slice. The sleep parameter includes, for example, but is not limited to at least one of the following: the first duration (for example, duration of the wait time), duration of being in the listen state, duration of being in the sleep state, a time point at which switching between the listen state and the sleep state is performed, or the like. In some examples, the sleep parameter may be configured after the terminal device 100 and the network device 200 successfully negotiate the sleep scheduling strategy 1, for example, after the terminal device 100 successfully sends the negotiation frame to the network device 200, for example, in a case in which the sleep scheduling strategy 1 is negotiated based on the foregoing manner 2 and manner 3. In some other examples, the sleep parameter may be configured before the terminal device 100 and the network device 200 negotiate the sleep scheduling strategy 1, for example, the sleep parameter is configured after the sleep scheduling strategy 1 is obtained.

In an implementation, the terminal device 100 may configure a transmit queue based on the obtained sleep scheduling strategy 1. The transmit queue may be used by the terminal device 100 to buffer to-be-sent uplink data in the transmit queue when the uplink data is detected in a time slice of the sleep state. In some examples, the sleep parameter may be configured after the terminal device 100 and the network device 200 successfully negotiate the sleep scheduling strategy 1, for example, after the terminal device 100 successfully sends the negotiation frame to the network device 200, for example, in a case in which the sleep scheduling strategy 1 is negotiated based on the foregoing manner 2 and manner 3. In some other examples, the sleep parameter may be configured before the terminal device 100 and the network device 200 negotiate the sleep scheduling strategy 1, for example, the sleep parameter is configured after the sleep scheduling strategy 1 is obtained.

In an implementation, after the terminal device 100 completes current data transmission with the network device 200, the terminal device 100 may enter the sleep state and wake up based on the sleep scheduling strategy 1 in the first duration, including: entering the sleep state at a start moment of the first time slice in the first duration, and being in the sleep state in the first time slice, and entering the listen state at a start moment of the second time slice in the first duration, and being in the working state in the second time slice. When the terminal device 100 enters the sleep state and wakes up based on the sleep scheduling strategy 1, the network device 200 may send a data frame to the terminal device 100 based on the first time slice and the second time slice in the first duration, including: The network device 200 does not send a data frame to the terminal device 100 in the first time slice (namely, a time slice of the sleep state) (in this case, if there is a to-be-sent data frame, the data frame may be buffered), and the network device 200 sends a data frame to the terminal device 100 in the second time slice (namely, a time slice of the listen state).

In an implementation, based on the configured sleep parameter, the terminal device 100 may be in the sleep state in the first time slice in the first duration, and be in the working state in the second time slice in the first duration. For a specific example, refer to FIG. 6A to FIG. 6C.

In an implementation, if the terminal device 100 has no uplink service or downlink service in the first duration, the terminal device 100 may enter the sleep state after the first duration is ended. For example, as shown in FIG. 7A, in a time from *t*₂₆ to *t*₂₇, the terminal device 100 may send a negotiation frame to the network device 200, and start the first duration from the time *t*₂₇. In a time from *t*₂₇ to *t*₂₈ (that is, in the first duration), the terminal device 100 has no uplink service or downlink service. Therefore, at an end time *t*₂₈ of the current first duration, the terminal device 100 may send a sleep frame to the network device 200, and then enter the sleep state.

In an implementation, if the terminal device 100 detects to-be-sent uplink data in a time slice of the sleep state in the first duration, the terminal device 100 may buffer the uplink data in the transmit queue, enter the listen state when a next time slice of the listen state of the time slice of the sleep state arrives, then enter a transmit state from the listen state, and send the uplink data buffered in the transmit queue to the network device 200 in the transmit state. In this case, the current first duration is ended in advance. If the terminal device 100 detects to-be-sent uplink data in a time slice of the listen state in the first duration, the terminal device 100 may not buffer the uplink data, but enter the transmit state, and send the uplink data to the network device 200 in the transmit state. In this case, the current first duration is ended in advance. For a specific implementation example, refer to the sleep/working process shown in FIG. 7A. It may be understood that buffering data in the transmit queue is pushing the data into the transmit queue, and sending data in the transmit queue is popping the data out of the transmit queue and sending the data. Therefore, the transmit queue does not store sent data, thereby reducing storage pressure on the device.

In some examples, in the first duration, when an application on the terminal device 100 has to-be-sent service data, the terminal device 100 may detect a status of a Wi-Fi system. If the Wi-Fi system is in the working state such as the listen state, the application may send the service data to the Wi-Fi system, so that the Wi-Fi system sends the service data to the network device 200 in the transmit state. If the Wi-Fi system is in the sleep state, the terminal device 100 may buffer the service data in the transmit queue, and when a next time slice of the listen state arrives, indicate the Wi-Fi system to wake up, and send the service data buffered in the transmit queue to the Wi-Fi system, so that the Wi-Fi system sends the service data to the network device 200 in the transmit state.

In an implementation, if the network device 200 detects to-be-sent downlink data in a time slice of the sleep state in the first duration, the network device 200 may buffer the downlink data, and the network device 200 may send the downlink data to the terminal device 100 after a next time slice of the listen state arrives. When the next time slice of the listen state arrives, the terminal device 100 enters the listen state, and enters a receive state when the downlink data is about to arrive, to receive the downlink data in the receive state. In this case, the current first duration is ended in advance. If the network device 200 detects to-be-sent downlink data in a time slice of the listen state in the first duration, the network device 200 may not buffer the downlink data, but send the downlink data to the terminal device 100. When the downlink data is about to arrive, the terminal device 100 may enter a receive state, and receive the downlink data. In this case, the current first duration is ended in advance. For a specific implementation example, refer to the sleep/working processes shown in FIG. 7B and FIG. 7C.

In some examples, when the terminal device 100 and the network device 200 negotiate based on the TWT or the private negotiation mechanism, the network device 200 may first send a trigger frame before sending downlink data, to notify the terminal device 100 that the network device 200 currently has downlink data to be sent to the terminal device 100. The network device 200 sends the downlink data only after receiving a request frame sent by the terminal device 100. For a specific example, refer to FIG. 7B. This is not limited thereto. In some other examples, when the terminal device 100 and the network device 200 negotiate based on the TWT or the private negotiation mechanism, the network device 200 may directly send the downlink data, and does not send the trigger frame. For a specific example, refer to FIG. 7C.

In some examples, when the terminal device 100 and the network device 200 negotiate based on the PSM, the network device 200 may first send a state-1 beacon frame before sending downlink data, to notify the terminal device 100 that the network device 200 currently has downlink data to be sent to the terminal device 100. The network device 200 sends the downlink data only after receiving a request frame sent by the terminal device 100. For a specific example, refer to FIG. 7B.

S105: The terminal device 100 obtains average traffic of the first service, and the terminal device 100 obtains a current channel capacity.

In an implementation, when the traffic type of the first service is the second type, the terminal device 100 may obtain the average traffic, which may be represented as X megabits per second (megabits per second, Mbps), of the first service. In some examples, the terminal device 100 may obtain the current average traffic of the first service by collecting statistics on and predicting traffic of the first service in a period of time. In some other examples, the terminal device 100 may alternatively obtain the average traffic of the first service from the network device 200, for example, by using the private negotiation mechanism.

In an implementation, when the traffic type of the first service is the second type, the terminal device 100 may estimate the current channel capacity, which may be represented as Y Mbps, based on a current channel condition and link information.

S106: The terminal device 100 obtains a sleep scheduling strategy 2 (including a first period) based on the second type, the delay sensitivity information, the average traffic, and the channel capacity.

In an implementation, the terminal device 100 may determine, based on the second type and the delay sensitivity information, that it is currently in a service scenario 2 (traffic exhibits a continuous pattern similar to that shown in FIG. 4B) and the maximum delay N that can be tolerated by the currently running first service. When it is currently in the service scenario 2, the terminal device 100 may determine, based on the average traffic X of the first service and the current channel capacity Y, whether to use a traffic shaping mode. If the current channel capacity is far greater than bandwidth of the current service (for example, whether Y/X is greater than or equal to a preset threshold, where the preset threshold is, for example, 10), the terminal device 100 may determine to use the traffic shaping mode, to integrate traffic of the second type into pulsed traffic similar to that shown in FIG. 8. In this case, the sleep scheduling strategy 2 is implemented based on the traffic shaping mode. Otherwise, the traffic shaping mode is not used. For example, in this case, the foregoing PSM sleep mechanism may be used, and S107 is not performed.

In an implementation, when determining to use the traffic shaping mode, the terminal device 100 may determine a length of a first time slice and a length of a second time slice based on N, and determine the first period (including the first time slice and the second time slice). The first time slice is a time slice in which the terminal device 100 is in a sleep state (namely, the foregoing time slice of the sleep state), and the second time slice is a time slice in which the terminal device 100 is in a listen state (namely, the foregoing time slice of the listen state). For an example of the first period in the sleep scheduling strategy 2, refer to FIG. 6A to FIG. 6C. In FIG. 6A to FIG. 6C, any time period including one time slice of the listen state and one time slice of the sleep state that are continuous may be one first period. For example, as shown in FIG. 6A, a 1^{st} first period includes a time slice 1 and a time slice 2, a 2^{nd} first period includes a time slice 3 and a time slice 4, and so on. For example, as shown in FIG. 6B, a 1^{st} first period includes a time slice 5 and a time slice 6, a 2^{nd} first period includes a time slice 7 and a time slice 8, a 3^{rd} first period includes a time slice 9 and a time slice 10, and so on. For example, as shown in FIG. 6C, a 1^{st} first period includes a time slice 11 and a time slice 12, a 2^{nd} first period includes a time slice 13 and a time slice 14, and so on.

In an implementation, the sleep scheduling strategy 2 may include: When determining to use the traffic shaping mode, the terminal device 100 may proceed with one or more first periods, and both the terminal device 100 and a network device 200 may buffer a to-be-sent data packet and periodically send the buffered data packet based on the first period. The terminal device 100/network device 200 may buffer the to-be-sent data packet in the first time slice (namely, a time slice of the sleep state) in the first period, and send the buffer data packet in the second time slice (namely, a time slice of the listen state) in the first period.

In an implementation, the sleep scheduling strategy 2 may include: When determining to use the traffic shaping mode, the terminal device 100 may proceed with one or more first periods; and when a specific condition is not met (for example, a data amount buffered in a transmit queue is greater than or equal to a queue threshold), maintain the traffic shaping mode, and continue to proceed with a subsequent first period; or when a specific condition is met, exit the traffic shaping mode, and no longer proceed with the first period. In this case, the terminal device 100 may re-trigger a decision of the sleep scheduling strategy, for example, perform the procedure in FIG. 10 again.

S107: The terminal device 100 negotiates the sleep scheduling strategy 2 with the network device 200, and enters the sleep state and wakes up based on the sleep scheduling strategy 2.

In an implementation, when determining to use the traffic shaping mode, the terminal device 100 may actively negotiate the sleep scheduling strategy 2 with the network device 200. An implementation of negotiating the sleep scheduling strategy 2 is similar to the implementation of negotiating the sleep scheduling strategy 1 in S104. A difference lies in that the first duration needs to be replaced with the first period. For details, refer to the descriptions of S104.

In an implementation, the terminal device 100 may first send a negotiation frame to the network device 200, to negotiate the sleep scheduling strategy 2 with the network device 200. After the negotiation succeeds (for example, after the negotiation frame is successfully sent), the terminal device 100 starts the first period, and enters the sleep state and wakes up based on the first time slice and the second time slice in the first period, that is, sends the negotiation frame before a start moment of the 1^{st} first period. The negotiation frame may include at least one of the following: information about the first period, information about the first time slice, or information about the second time slice. The information about the first period may include but is not limited to at least one of the following: a length, whether lengths of a plurality of first periods are equal, or an association relationship between lengths of a plurality of first periods. The information about the first time slice/second time slice may include but is not limited to at least one of the following: a length, whether lengths of first time slices/second time slices in the plurality of first periods are equal, an association relationship between lengths of first time slices/second time slices in the plurality of first periods, a proportion in the first period, or the like. For example, the negotiation frame includes the length of the first time slice and the length of the second time slice. For another example, the negotiation frame includes the length of the first period, and the proportion of the first time slice or the second time slice in the first period. For a specific implementation example, refer to the implementation 2 and the implementation 3 of negotiating the sleep scheduling strategy 1 in S104 (in this case, the sleep scheduling strategy 1 needs to be replaced with the sleep scheduling strategy 2).

In another implementation, the terminal device 100 may alternatively negotiate the sleep scheduling strategy 2 with the network device 200 in the first period. For a specific implementation example, refer to the foregoing implementation 1 of negotiating the sleep scheduling strategy 1 (in this case, the sleep scheduling strategy 1 needs to be replaced with the sleep scheduling strategy 2).

In an implementation, the terminal device 100 may configure a sleep parameter based on the obtained sleep scheduling strategy 2, so that when the terminal device 100 subsequently enters the sleep state and wakes up in the first period based on the configured sleep parameter, there can be correspondence with the first time slice and the second time slice. Specific descriptions are similar to the descriptions of configuring the sleep parameter in S104. Details are not described.

In an implementation, the terminal device 100 may configure the transmit queue based on the obtained sleep scheduling strategy 2. Specific descriptions are similar to the descriptions of configuring the transmit queue in S104. Details are not described. In an implementation, the terminal device 100 may further configure a threshold of the transmit queue (which may be briefly referred to as the queue threshold) based on the obtained sleep scheduling strategy 2. When the data amount buffered in the transmit queue is greater than or equal to the queue threshold, it indicates that an excessively large quantity of packets are accumulated and to be sent, and it may be considered that the previously obtained traffic type and average traffic are invalid. In this case, the terminal device 100 may immediately wake up to enter a transmit state, to send the accumulated packets to the network device 200. In addition, the terminal device 100 may re-trigger a decision of the sleep scheduling strategy, for example, perform the procedure in FIG. 10 again.

In an implementation, after determining to use the traffic shaping mode, the terminal device 100 may enter the sleep state and wake up based on the sleep scheduling strategy 2 in one or more first periods, including: entering the sleep state at a start moment of a first time slice in each first period, and being in the sleep state in the first time slice, and entering the listen state at a start moment of a second time slice in each first period, and being in a working state in the second time slice. In addition, the terminal device 100 may send a data frame to the network device 200 based on the first time slice and the second time slice in the first period, including: The terminal device 100 does not send a data frame to the network device 200 in the first time slice (namely, a time slice of the sleep state) (in this case, if there is a to-be-sent data frame, the data frame may be buffered), and the terminal device 100 sends a data frame to the network device 200 in the second time slice (namely, a time slice of the listen state).

In an implementation, when the terminal device 100 enters the sleep state and wakes up based on the sleep scheduling strategy 2, the network device 200 may send a data frame to the terminal device 100 based on the first time slice and the second time slice in the first period, including: The network device 200 does not send a data frame to the terminal device 100 in the first time slice (namely, a time slice of the sleep state) (in this case, if there is a to-be-sent data frame, the data frame may be buffered), and the network device 200 sends a data frame to the terminal device 100 in the second time slice (namely, a time slice of the listen state).

In an implementation, based on the configured sleep parameter, the terminal device 100 may proceed with one or more first periods, be in the sleep state in a first time slice in each first period, and be in the working state in a second time slice in the first period. For a specific example, refer to FIG. 6A to FIG. 6C.

In an implementation, if the terminal device 100 detects to-be-sent uplink data in a time slice of the sleep state in the first period, the terminal device 100 may buffer the uplink data in the transmit queue, enter the listen state when a next time slice of the listen state of the time slice of the sleep state arrives, then enter a transmit state from the listen state, and send the uplink data buffered in the transmit queue to the network device 200 in the transmit state. The terminal device 100 enters the sleep state when a next time slice of the sleep state of the time slice of the listen state arrives. If the terminal device 100 detects to-be-sent uplink data in a time slice of the listen state in the first period, the terminal device 100 may not buffer the uplink data, but enter the transmit state, and send the uplink data to the network device 200 in the transmit state. The terminal device 100 enters the sleep state when a next time slice of the sleep state of the time slice of the listen state arrives. For a specific implementation example, refer to the sleep/working process shown in FIG. 9A. For an example of interaction between an application and a Wi-Fi system in the sleep scheduling strategy 2, refer to the example of interaction between the application and the Wi-Fi system shown in S104. Details are not described.

In an implementation, if the network device 200 detects to-be-sent downlink data in a time slice of the sleep state in the first period, the network device 200 may buffer the downlink data, and the network device 200 may send the downlink data to the terminal device 100 after a next time slice of the listen state of the time slice of the sleep state arrives. When the next time slice of the listen state arrives, the terminal device 100 enters the listen state, and enters a receive state when the downlink data is about to arrive, to receive the downlink data in the receive state. The terminal device 100 enters the sleep state when a next time slice of the sleep state of the time slice of the listen state arrives. If the network device 200 detects to-be-sent downlink data in a time slice of the listen state in the first period, the network device 200 may not buffer the downlink data, but send the downlink data to the terminal device 100. When the downlink data is about to arrive, the terminal device 100 may enter a receive state, and receive the downlink data. The terminal device 100 enters the sleep state when a next time slice of the sleep state of the time slice of the listen state arrives. For a specific implementation example, refer to the sleep/working process shown in FIG. 9B. Before sending the downlink data to the terminal device 100, the network device 200 may first notify the terminal device 100 that the network device 200 currently has the downlink data to be sent to the terminal device 100, or may directly send the downlink data without notifying the terminal device 100. For a specific example, refer to the descriptions of the example in S104. Details are not described.

In the method shown in FIG. 10, for the first service of the first type (namely, a first service with pulsed traffic), the first duration may be used to replace a wait time *T_{wait}* in an original PSM sleep mechanism (in this period, the listen state is maintained). A listen manner used in the first duration is more flexible, and a proportion of listen time in the first duration may be less than or equal to 50%. Therefore, power consumption overheads in the listen state are reduced by at least 50%. In addition, the length of the time slice of the sleep state in the first duration is determined based on the maximum delay N that can be tolerated by the currently running service. Therefore, a delay requirement of the service is ensured.

For the first service of the second type (namely, a first service with continuous traffic), the traffic of the first service may be shaped into pulsed traffic by using traffic buffering control and the first period (as shown in FIG. 8). The terminal device 100 may periodically enter the sleep state, and periodically perform a data transmission process. This resolves a problem that the sleep state cannot be entered in an original sleep mechanism, that is, enables the terminal device 100 to enter the sleep state as much as possible, and effectively reduces power consumption of the device. In addition, the length of the time slice of the sleep state in the first period is determined based on the maximum delay N that can be tolerated by the currently running service. Therefore, a delay requirement of the service is ensured.

This is not limited to the embodiment shown in FIG. 10. In some other embodiments, when the traffic type of the first service is the first type (that is, pulsed traffic), if the delay sensitivity information N obtained in S101 is greater than or equal to the preset first duration (for example, the wait time *T_{wait}*), the terminal device 100 may directly enter the sleep state after completing data transmission with the network device 200, that is, the wait time *T_{wait}* is directly canceled. This completely avoids a power consumption waste in the listen state in the wait time. Because N is large, real-time experience of the current service is not affected.

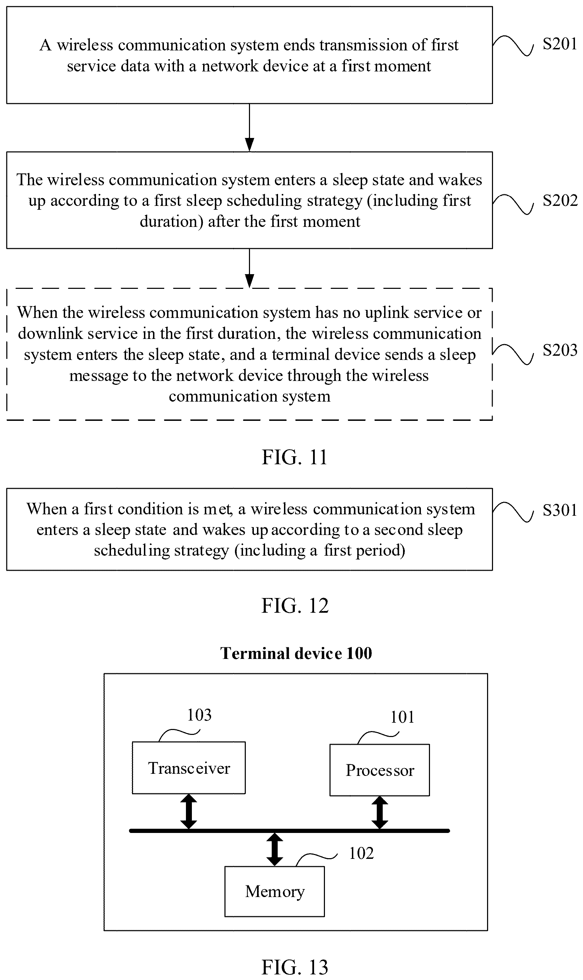

FIG. 11 is a schematic flowchart of another sleep scheduling method according to an embodiment of this application. The method may include but is not limited to the following steps.

S201: A wireless communication system of a terminal device ends transmission of first service data with a network device at a first moment.

For an example of the wireless communication system, refer to the example of the wireless communication module in FIG. 2.

S202: The wireless communication system of the terminal device enters a sleep state and wakes up according to a first sleep scheduling strategy (including first duration) after the first moment.

In an implementation, the first sleep scheduling strategy includes the first duration. The first duration includes one or more first time slices and one or more second time slices. In addition, the first sleep scheduling strategy includes: The terminal device may replace a wait time of a power save mode PSM with the first duration. In the first duration, the wireless communication system enters the sleep state at a start moment of the first time slice, and is in the sleep state in the first time slice, and the wireless communication system enters a listen state at a start moment of the second time slice, and is in a working state in the second time slice.

In an implementation, a status of the wireless communication system of the terminal device includes the sleep state and the working state, and the working state includes the listen state, a transmit state, and a receive state. For a specific example, refer to the descriptions of the status of the Wi-Fi system.

In an implementation, in the first duration, a time slice in which the terminal device is in the sleep state is collectively referred to as the first time slice, and a time slice in which the terminal device is in the working state is collectively referred to as the second time slice. A start moment of the first duration is the start moment of the first time slice or the start moment of the second time slice, that is, a 1^{st} time slice in the first duration may be the first time slice or the second time slice. The first time slice and the second time slice in the first duration alternate. In a case, one second time slice may have two adjacent first time slices, an end moment of one first time slice is a start moment of the second time slice, and an end moment of the second time slice is a start moment of the other first time slice. Similarly, one first time slice may have two adjacent second time slices. For example, in FIG. 6A, a time slice 3 of the listen state has two adjacent time slices of the sleep state: a time slice 2 and a time slice 4, and the time slice 2 of the sleep state has two adjacent time slices: a time slice 1 and the time slice 3. It may be understood that the 1^{st} time slice and a last time slice in the first duration have only one adjacent time slice. For example, the 1^{st} time slice in the first duration is the first time slice, the start moment of the first time slice is the start moment of the first duration, an end moment of the first time slice is a start moment of an adjacent second time slice, the last time slice in the first duration is the second time slice, the start moment of the second time slice is an end moment of an adjacent first time slice, and an end moment of the second time slice is an end moment of the first duration.

In an implementation, the first duration is related to the foregoing preset wait time, for example, the first duration and the preset wait time are equal.

In an implementation, before S202, the terminal device may obtain a first delay required by a currently running first service. For example, the first service data corresponds to the first service. The first delay may be N. A length of the first time slice and a length of the second time slice in the first duration may be determined based on the first delay. For example, the length of the first time slice is greater than or equal to the first delay, and the length of the second time slice is equal to the first delay.

In an implementation, a quantity of first time slices and a quantity of second time slices in the first duration may be the same, for example, the descriptions in FIG. 6A to FIG. 6C (the time slice of the listen state is the second time slice), or may be different.

In an implementation, lengths of all first time slices in the first duration may be equal, for example, the time slices of the sleep state in FIG. 6A and FIG. 6C, or lengths of at least two first time slices in the first duration may be unequal, for example, the time slices of the sleep state in FIG. 6B. Lengths of all second time slices in the first duration may be equal, for example, the time slices of the listen state in FIG. 6A to FIG. 6C, or lengths of at least two second time slices in the first duration may be unequal.

In an implementation, the length of the first time slice and the length of the second time slice in the first duration may be equal, for example, the descriptions in FIG. 6A (the time slice of the listen state is the second time slice), or may be unequal, for example, the descriptions in FIG. 6B and FIG. 6C (the time slice of the listen state is the second time slice).

In an implementation, when the wireless communication system of the terminal device has no uplink service or downlink service in the second time slice in the first duration, a length of a first time slice whose end moment is the start moment of the second time slice is less than a length of a first time slice whose start moment is an end moment of the second time slice. For example, in FIG. 6B, when there is no uplink service or downlink service in a time slice 7 (namely, the second time slice) of the listen state, a length of a time slice 8 is greater than a length of a time slice 6.

S203: When the wireless communication system of the terminal device has no uplink service or downlink service in the first duration, the wireless communication system enters the sleep state, and the terminal device sends a sleep message to the network device through the wireless communication system.

S203 is an optional step.

This is not limited to the procedure shown in FIG. 11. In some other embodiments, the terminal device enters the sleep state and wakes up based on the PSM. In this case, after the first moment, the terminal device does not perform S202 and S203, but enters the listen state (that is, enters the wait time). If there is no uplink service or downlink service in the wait time after the listen state is entered, the terminal device sends a sleep message to the network device through the wireless communication system, and the wireless communication system enters the sleep state. The sleep message indicates that the terminal device is about to enter the sleep state, and the sleep message is the foregoing sleep frame. For a specific example, refer to FIG. 5A.

The method shown in FIG. 11 may correspond to the case in which the traffic type of the first service is the first type in FIG. 10, and S202 may correspond to S104 in FIG. 10. In an implementation, before S202, the terminal device may further perform S101, S102 (a determining result is the first type), and S103 in FIG. 10.

FIG. 12 is a schematic flowchart of another sleep scheduling method according to an embodiment of this application. The method may include but is not limited to the following steps.

S301: When a first condition is met, a wireless communication system of a terminal device enters a sleep state and wakes up according to a second sleep scheduling strategy (including a first period).

In an implementation, the first condition includes that a ratio (that is, Y/X) of a current wireless communication channel capacity (that is, Y) to a first value (that is, X) is greater than or equal to a preset threshold (for example, 10), and the first value is an average traffic value of a first service currently running on the terminal device. Optionally, when the first condition is met, it may indicate that the current channel capacity is far greater than bandwidth of the current service.

In an implementation, the second sleep scheduling strategy includes the first period. The first period includes a first time slice and a second time slice. In addition, the second sleep scheduling strategy includes: The terminal device may proceed with one or more first periods. In each first period, the wireless communication system enters the sleep state at a start moment of the first time slice, and is in the sleep state in the first time slice, and the wireless communication system enters a listen state at a start moment of the second time slice, and is in a working state in the second time slice.

In an implementation, a status of the wireless communication system of the terminal device includes the sleep state and the working state, and the working state includes the listen state, a transmit state, and a receive state. For a specific example, refer to the descriptions of the status of the Wi-Fi system.

In an implementation, in the first period, a time slice in which the terminal device is in the sleep state is referred to as the first time slice, and a time slice in which the terminal device is in the working state is referred to as the second time slice. A start moment of the first period is the start moment of the first time slice or the start moment of the second time slice, that is, a 1^{st} time slice in the first period may be the first time slice or the second time slice. In the first period, an end moment of the first time slice is the start moment of the second time slice, that is, the first time slice is before the second time slice, or the start moment of the first time slice is an end moment of the second time slice, that is, the second time slice is before the first time slice.

In an implementation, before S301, the terminal device may obtain a first delay required by the currently running first service. For example, first service data corresponds to the first service. The first delay may be N. A length of the first time slice and a length of the second time slice in the first period may be determined based on the first delay.

In an implementation, the second sleep scheduling strategy includes a plurality of first periods. Lengths of all of the plurality of first periods may be equal. For example, in FIG. 6A, each first period includes one first time slice of N ms and one second time slice of N ms. For another example, in FIG. 6C, each first period includes one first time slice of N ms and one second time slice of *N*₄ ms. Alternatively, lengths of all of the plurality of first periods may be unequal. For example, in FIG. 6B, a 1^{st} first period includes a time slice 5 of N ms (that is, the second time slice) and a time slice 6 of N ms (that is, the first time slice), and a 2^{nd} first period includes a time slice 7 of N ms (that is, the second time slice) and a time slice 8 of *N*₁ ms (that is, the first time slice). In the plurality of first periods, lengths of first time slices in all the first periods are equal, for example, the time slices of the sleep state in FIG. 6A and FIG. 6C, or may be unequal, for example, the time slices of the sleep state in FIG. 6B. In the plurality of first periods, lengths of second time slices in all the first periods are equal, for example, the time slices of the listen state in FIG. 6A to FIG. 6C, or may be unequal.

In an implementation, before S301, the terminal device may obtain first traffic information (including a delay required by the first service) of the currently running first service. For details, refer to the descriptions of S101 and S105 in FIG. 10. The first traffic information may include at least the following: a traffic type, delay sensitivity information, or average traffic. Then, the terminal device may determine the first period based on the first traffic information. For details, refer to the descriptions of S106 in FIG. 10. In S301, when the terminal device proceeds with the first period, if a specific condition is met, the terminal device re-obtains second traffic information of a currently running second service, for example, performs the procedure shown in FIG. 10 again. The specific condition is that a data amount of service data buffered in a first queue is greater than or equal to a queue threshold. The first queue is used by the wireless communication system to buffer detected to-be-sent service data in the first time slice, and the first queue is the foregoing transmit queue.

This is not limited to the procedure shown in FIG. 12. In some other embodiments, when the first condition is not met, S301 may not be performed, and the terminal device enters the sleep state and wakes up based on a PSM. After the terminal device transmits the first service data with the network device through the wireless communication system, the wireless communication system of the terminal device enters the listen state (that is, enters a wait time). Because a traffic type of the terminal device is a second type (for a specific example, refer to the traffic model shown in FIG. 4B), the terminal device has an uplink service and/or a downlink service in the wait time. Therefore, the terminal device ends the current wait time, and performs a service data transmission process with the network device. For a specific example, refer to FIG. 5B.

The method shown in FIG. 12 may be used for the case in which the traffic type of the first service is the second type in FIG. 10, and S301 may correspond to S107 in FIG. 10. In an implementation, before S301, the terminal device may further perform S101, S102 (a determining result is the second type), S105, and S106 in FIG. 10.

FIG. 13 is a diagram of a hardware structure of another terminal device 100 according to an embodiment of this application.

As shown in FIG. 13, the terminal device 100 may include a processor 101, a memory 102, and a transceiver 103. In an implementation, the processor 101, the memory 102, and the transceiver 103 may be connected to each other through a bus.

The processor 101 may be one or more central processing units (central processing units, CPUs). When the processor 101 is one CPU, the CPU may be a single-core CPU, or may be a multi-core CPU. The memory 102 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 102 is configured to store a related computer program and data. The transceiver 103 is configured to receive and send data. In an implementation, the transceiver 103 may include a Wi-Fi communication module, and the Wi-Fi communication module may be configured to implement a process of transmitting a Wi-Fi frame with a network device 200.

The processor 101 may be configured to read a computer program or instructions stored in the memory 102, to perform the steps performed by the terminal device 100/STA in embodiments of this application, for example, the sleep/working processes shown in FIG. 7A to FIG. 7C, the sleep/working processes shown in FIG. 9A and FIG. 9B, and the sleep scheduling methods shown in FIG. 10 to FIG. 12.

In the foregoing embodiments, a Wi-Fi technology is used as an example for description. Embodiments of this application may also be applied to another wireless communication technology, for example, Bluetooth, NFC, IR, a GNSS, SLE, or SLB. This is not limited in embodiments of this application.

All or some of the methods provided in embodiments of this application may be implemented by using software, hardware, firmware, or any combination thereof. When software is used for implementation, all or some of the methods may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, into which one or more usable media are integrated. The usable medium may be a magnetic medium (for example, a floppy disk, a hard disk, or a magnetic tape), an optical medium (for example, a digital video disc (digital video disc, DVD)), a semiconductor medium (for example, a solid-state disk (solid-state disk, SSD)), or the like. In conclusion, the foregoing embodiments are merely intended to describe the technical solutions in this application, but not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof. However, these modifications or replacements do not make the essence of the corresponding technical solutions depart from the scope of the technical solutions in embodiments of this application.

## Claims

1. A sleep scheduling method, applied to a terminal device, wherein a status of a wireless communication system of the terminal device comprises a sleep state and a working state, the working state comprises a listen state, and the method comprises:
ending, by the wireless communication system, transmission of first service data with a network device at a first moment;
entering, by the wireless communication system, the sleep state and waking up according to a first sleep scheduling strategy after the first moment, wherein the first sleep scheduling strategy comprises first duration, the first duration comprises one or more first time slices and one or more second time slices, an end moment of a first time slice is a start moment of a second time slice, an end moment of the second time slice is a start moment of another first time slice, the wireless communication system is in the sleep state in the first time slice, and the wireless communication system is in the working state in the second time slice; and
when the wireless communication system has no uplink service or downlink service in the first duration, entering, by the wireless communication system, the sleep state, and sending a first message to the network device through the wireless communication system, wherein the first message indicates that the terminal device is about to enter the sleep state.

2. The method according to claim 1, wherein the method further comprises:
entering, by the wireless communication system, the listen state after the first moment;
when there is no uplink service or downlink service in second duration after the wireless communication system enters the listen state, sending a second message to the network device through the wireless communication system, wherein the second message indicates that the terminal device is about to enter the sleep state, and the second duration is a wait time preset by the terminal device; and
entering, by the wireless communication system, the sleep state.

3. The method according to claim 2, wherein the first duration is related to the second duration, and a start moment of the first duration is the start moment of the first time slice or the start moment of the second time slice.

4. The method according to any one of claims 1 to 3, wherein before entering, by the wireless communication system, the sleep state and waking up according to the first sleep scheduling strategy, the method further comprises:
obtaining a first delay required by a first service currently running on the terminal device, wherein a length of the first time slice and a length of the second time slice are determined based on the first delay.

5. The method according to any one of claims 1 to 4, wherein a quantity of the one or more first time slices and a quantity of the one or more second time slices are the same or different;
lengths of all of the one or more first time slices are equal, or lengths of at least two of the one or more first time slices are unequal;
lengths of all of the one or more second time slices are equal, or lengths of at least two of the one or more second time slices are unequal; and
the length of the first time slice and the length of the second time slice are equal or unequal.

6. The method according to any one of claims 1 to 5, wherein when the wireless communication system has no uplink service or downlink service in a second time slice, a length of a first time slice whose end moment is a start moment of the second time slice is less than a length of a first time slice whose start moment is an end moment of the second time slice.

7. The method according to any one of claims 1 to 6, wherein entering, by the wireless communication system, the sleep state and waking up according to the first sleep scheduling strategy comprises:
sending a third message to the network device through the wireless communication system before the start moment of the first time slice, wherein the third message indicates that the terminal device is about to enter the sleep state; and
sending a fourth message to the network device through the wireless communication system after the start moment of the second time slice, wherein the fourth message indicates that the terminal device is in the working state, and both the third message and the fourth message are related to a power save mode PSM.

8. The method according to any one of claims 1 to 6, wherein performing, by the wireless communication system, sleep scheduling according to the first sleep scheduling strategy comprises:
sending a fifth message to the network device through the wireless communication system before the start moment of the first duration, wherein the fifth message is a target wake time TWT setup frame in a TWT mechanism, the TWT setup frame is used to negotiate a TWT schedule, the TWT schedule corresponds to the first duration, the TWT schedule comprises a time slice of a doze state and a time slice of a TWT service period SP state, the time slice of the doze state corresponds to the first time slice, and the time slice of the TWT SP state corresponds to the second time slice.

9. The method according to any one of claims 1 to 6, wherein performing, by the wireless communication system, sleep scheduling according to the first sleep scheduling strategy comprises:
sending a sixth message to the network device through the wireless communication system before the start moment of the first duration, wherein the sixth message is an action frame that is negotiated by the terminal device and the network device and that is used to transmit control information between the terminal device and the network device.

10. The method according to any one of claims 1 to 9, wherein the working state comprises a transmit state, and the method further comprises:
when the wireless communication system is in the sleep state in the first time slice, detecting, by the terminal device, second service data to be sent to the network device, and buffering the second service data in a preset first queue;
entering, by the wireless communication system, the transmit state after the end moment of the first time slice; and
sending the second service data in the first queue to the network device through the wireless communication system.

11. The method according to any one of claims 1 to 9, wherein the working state comprises a receive state, and the method further comprises:
when the network device has service data to be sent to the terminal device, entering, by the wireless communication system, the receive state after the end moment of the first time slice; and receiving, through the wireless communication system, third service data sent by the network device; or
when the network device has service data to be sent to the terminal device, entering, by the wireless communication system, the receive state after the end moment of the first time slice; receiving, through the wireless communication system, a seventh message sent by the network device, wherein the seventh message indicates that the network device has service data to be sent to the terminal device; sending an eighth message to the network device through the wireless communication system, wherein the eighth message is used to request the network device to send service data; and receiving, through the wireless communication system, fourth service data sent by the network device.

12. The method according to any one of claims 1 to 11, wherein before the wireless communication system enters the sleep state and wakes up according to the first sleep scheduling strategy, the first service running on the terminal device comprises at least one of the following: an online play service of a short video application, an online play service of a video application, an online reading service or an online book listening service of a reading application, or an online web page service of a browser application.

13. The method according to any one of claims 1 to 12, wherein the terminal device is a station STA, the network device is a wireless access point AP, and the network device is configured to enable the terminal device to communicate with an internet through the wireless communication system.

14. The method according to any one of claims 1 to 13, wherein the wireless communication system is a wireless fidelity Wi-Fi system.

15. A sleep scheduling method, applied to a terminal device, wherein a status of a wireless communication system of the terminal device comprises a sleep state and a working state, the working state comprises a listen state, and the method comprises:
when a first condition is met, entering, by the wireless communication system, the sleep state and waking up according to a first sleep scheduling strategy, wherein the first condition is that a ratio of a current wireless communication channel capacity to a first value is greater than or equal to a preset threshold, the first value is an average traffic value of a first service currently running on the terminal device, the first sleep scheduling strategy comprises a first period, the first period comprises a first time slice and a second time slice, an end moment of the first time slice is a start moment of the second time slice, or a start moment of the first time slice is an end moment of the second time slice, the wireless communication system is in the sleep state in the first time slice, and the wireless communication system is in the working state in the second time slice.

16. The method according to claim 15, wherein the method further comprises:
when the first condition is not met, after first service data is transmitted with a network device through the wireless communication system, entering, by the wireless communication system, the listen state; and
when there is an uplink service or a downlink service in first duration after the wireless communication system enters the listen state, performing a service data transmission process with the network device through the wireless communication system, wherein the first duration is a wait time preset by the terminal device.

17. The method according to claim 15 or 16, wherein before entering, by the wireless communication system, the sleep state and waking up according to the first sleep scheduling strategy, the method further comprises:
obtaining a first delay required by the first service currently running on the terminal device, wherein a length of the first time slice and a length of the second time slice are determined based on the first delay, and the length of the first time slice and the length of the second time slice are equal or unequal.

18. The method according to any one of claims 15 to 17, wherein the first sleep scheduling strategy comprises a plurality of first periods;
lengths of all of the plurality of first periods are equal, or lengths of at least two of the plurality of first periods are unequal;
in the plurality of first periods, lengths of first time slices in all the first periods are equal, or lengths of first time slices in at least two first periods are unequal; and
in the plurality of first periods, lengths of the second time slices in all the first periods are equal, or lengths of second time slices in at least two first periods are unequal.

19. The method according to any one of claims 15 to 18, wherein entering, by the wireless communication system, the sleep state and waking up according to the first sleep scheduling strategy comprises:
sending a first message to the network device through the wireless communication system before the start moment of the first time slice, wherein the first message indicates that the terminal device is about to enter the sleep state; and
sending a second message to the network device through the wireless communication system after the start moment of the second time slice, wherein the second message indicates that the terminal device is in the working state, and both the first message and the second message are related to a power save mode PSM.

20. The method according to any one of claims 15 to 18, wherein entering, by the wireless communication system, the sleep state and waking up according to the first sleep scheduling strategy comprises:
sending a third message to the network device through the wireless communication system before a start moment of the first period, wherein the third message is a target wake time TWT setup frame in a TWT mechanism, the TWT setup frame is used to negotiate a TWT schedule, the TWT schedule corresponds to the first period, the TWT schedule comprises a time slice of a doze state and a time slice of a TWT service period SP state, the time slice of the doze state corresponds to the first time slice, and the time slice of the TWT SP state corresponds to the second time slice.

21. The method according to any one of claims 15 to 18, wherein entering, by the wireless communication system, the sleep state and waking up according to the first sleep scheduling strategy comprises:
sending a fourth message to the network device through the wireless communication system before a start moment of the first period, wherein the fourth message is an action frame that is negotiated by the terminal device and the network device and that is used to transmit control information between the terminal device and the network device.

22. The method according to any one of claims 15 to 21, wherein the working state comprises a transmit state, and the method further comprises:
entering, by the wireless communication system, the sleep state at the start moment of the first time slice;
if the terminal device detects, in the first time slice, second service data to be sent to the network device, buffering the second service data in a preset first queue;
entering, by the wireless communication system, the transmit state after the start moment of the second time slice;
sending the service data in the first queue to the network device through the wireless communication system in the second time slice; and
entering, by the wireless communication system, the sleep state at the end moment of the second time slice.

23. The method according to any one of claims 15 to 21, wherein the working state comprises a receive state, and the method further comprises:
entering, by the wireless communication system, the sleep state at the start moment of the first time slice;
when the network device has service data to be sent to the terminal device, entering, by the wireless communication system, the receive state after the start moment of the second time slice;
receiving, through the wireless communication system in the second time slice, third service data sent by the network device; and
entering, by the wireless communication system, the sleep state at the end moment of the second time slice.

24. The method according to any one of claims 15 to 23, wherein before entering, by the wireless communication system, the sleep state and waking up according to the first sleep scheduling strategy, the method further comprises:
obtaining first traffic information of the first service currently running on the terminal device, wherein the first traffic information comprises a delay required by the first service; and
determining the first period based on the first traffic information; and
the method further comprises:
when the wireless communication system enters the sleep state and wakes up according to the first sleep scheduling strategy, if a second condition is met, re-obtaining second traffic information of a second service currently running on the terminal device, wherein the second condition is that a data amount of service data buffered in the first queue is greater than or equal to a queue threshold, and the first queue is used by the wireless communication system to buffer detected to-be-sent service data in the first time slice.

25. The method according to any one of claims 15 to 24, wherein before the wireless communication system enters the sleep state and wakes up according to the first sleep scheduling strategy, the first service running on the terminal device comprises at least one of the following: an online live broadcast service of a live broadcast application, an online call service of a network call application, or an online game service of a game application.

26. The method according to any one of claims 15 to 25, wherein the terminal device is a station STA, the network device is a wireless access point AP, and the network device is configured to enable the terminal device to communicate with an internet through the wireless communication system.

27. The method according to any one of claims 15 to 26, wherein the wireless communication system is a wireless fidelity Wi-Fi system.

28. The method according to any one of claims 15 to 27, wherein the start moment of the first period is the start moment of the first time slice or the start moment of the second time slice.

29. A terminal device, comprising a transceiver, a processor, and a memory, wherein the memory is configured to store a computer program, and the processor invokes the computer program to perform the method according to any one of claims 1 to 28.

30. A computer storage medium, wherein the computer storage medium stores a computer program, and when the computer program is executed by a processor, the method according to any one of claims 1 to 28 is implemented.
